# EUROPEAN PATENT SPECIFICATION

(11) **EP 2 046 883 B1**
(45) Date of publication and mention of the grant of the patent: **09.12.2009**
(21) Application number: 07787877.5
(22) Date of filing: 25.07.2007
(51) Int. Cl.: C08K 5/00

(54) **IMPROVED PROCESSING CONDITIONS OF POLYETHYLENE ARTICLES IN COURSE OF THEIR MANUFACTURE BY MELT PROCESSING**
VERBESSERTE VERARBEITUNGSBEDINGUNGEN FÜR POLYETHYLENGEGENSTÄNDE IM LAUF IHRER HERSTELLUNG DURCH VERARBEITUNG IN DER SCHMELZE
CONDITIONS AMÉLIORÉES DE TRAITEMENT D'ARTICLES EN POLYÉTHYLÈNE DURANT LEUR FABRICATION PAR TRAITEMENT PAR FUSION

(30) Priority: 25.07.2006 EP 06291216
(43) Date of publication of application: 15.04.2009
(73) Proprietor: Clariant Finance (BVI) Limited, Road Town, Tortola (VG)
(72) Inventor: DONGIOVANNI, Ernesto, F-68330 Horbourg-Wihr (FR); SUPAT, Korada, Khonkaen, 40002 (TH); SAISUWAN, Warangkana, Bangsue, Bangkok, 10800 (TH); KRÖHNKE, Christoph, 79206 Breisach-Oberrimsingen (DE)
(74) Representative: Hütter, Klaus
(86) International application number: PCT/EP2007/057647
(87) International publication number: WO 2008/012319

(56) References cited:
- EP-A2- 0 340 785
- EP-A2- 1 433 811
- WO-A-98/25998
- US-A- 3 354 117
- US-A- 3 755 610
- US-B1- 6 225 385
- US-B1- 6 420 461
- PFAHLER, G.: "The stabilization of polypropylene (PP) and high-density polyethylene (HDPE) for heavy duty applications" PLASTICS SOUTHERN AFRICA, vol. 11, no. 4, 1981, pages 53-57, XP001248101

## Description

The present invention relates to the manufacture of polyethylene based wall articles with improved color and processing conditions, which can be surprisingly reached by specific combination of stabilizers.

Polyolefins and other thermoplastics are subject to attack by oxygen at normal and elevated temperatures. Antioxidants and processing stabilizers retard polymer oxidation during extrusion, part production (injection molding, blow molding, rotomolding etc.) and end-use. Antioxidants and processing stabilizers help to control polymer color and melt flow, and help to maintain the polymer's physical properties in general. The trend towards more demanding processing conditions has led to the need for a stabilization "system" approach. The combination of phenolic antioxidant and a phosphite based processing stabilizer can improve color and melt stability during processing while maintaining long term heat stability. This system approach protects the polymer from degradation during compounding, fabrication, and regrinding operations. All the formulation components of the polymer system have the potential for (1) providing the environment for stabilizer activity, and (2) influencing and participating in the stabilization reactions that occur.

Those stabilization principles are of economic interest for a series of polyethylene based plastic articles which arc characterized by a certain erection consisting of walls with defined thickness. Practical examples are polyethylene tanks, containment basins, cone-bottom tanks, cross linked polyethylene tanks, also corresponding double-walled constructions but also plating barrels, danglers, plastic baskets for commercial, industrial, agricultural and individuals' applications.

A particular focus is on rotational molding or rotational casting applications. In the following these particular applications are subsumized as rotomolding procedure, which is often applied to produce larger hollow bodies from plastics which can be additionally reinforced by glass fibers. The procedure occurs as follows: the plastic material is filled in a mold, which is afterwards closed. This device is heated clearly above the melting range of the plastic material and rotated at low speed around different axis which leads to a deposition of the plastic melt at the inner wall side of the rotational device. After cooling, the hollow plastic product can be removed. With this method products like tanks and containers for trucks and fixed storage purposes made of medium density polyethylene (MDPE, MDPE being often also classified as high density polyethylene HDPE) or Low Linear Density Polyethylene (LLDPE) can be produced. Preferably to MDPE or LLDPE homopolymers, copolymers of ethylene with butene (MDPE- or LLDPE-butene copolymers), more preferably copolymers of ethylene with hexene or octane (MDPE- or LLDPE-hexene copolymers or MDPE- or LLDPE-octene copolymers), provide the necessary durability and stiffness molding while processing takes place as easily as other rotomolding resins with similar melt indices. Other examples are large agricultural and chemical storage containers and water tanks, and for boats, kayaks and canoes.

Usually the required oven temperatures during the procedure are above 250°C and exceed sometimes even temperatures of 400°C. Those harsh conditions require a careful selection of stabilizers besides the suitable polymer type. Rotomolding polyolefin grades have to provide for a broad processing window, (i.e. outstanding color melt flow stability), a good resistance to oxidation during processing, and should have as low stickiness to the mold as possible for the good release of the article after processing. With their high stiffness and excellent mechanical properties, products molded with above mentioned polyethylenes nowadays can substitute cross-linked polyethylene, fiberglass and even steel articles.

The use of stabilizer combinations of phosphites or phosphonites with sterically hindered phenol based antioxidants and/or sterically hindered amine based stabilizers (HAS) in polyolefins is known from R. Gächter, H. Müller, "Plastics Additives Handbook", Hanser Publishers, pages 40-71 (1990).

US2003146542 discloses a process for the preparation of rotational molded polyolefin polymer products.

WO0162832 discloses a polyolefin polymer powder for use in rotational molding in the presence of stabilizers, including UV-stabilizers.

US 3,755,610 discloses a product, which is obtainable by reacting PCl₃ with 4,4'-thiobis-(6-tert.-butyl-m-cresol).

Unfortunately the known stabilizer systems only meet to a certain extent all requirements with regard to molding of polyethylene articles.

It has been surprisingly found that certain combinations of stabilizers are able to improve the state of the art for processing of polyethylene type polymers.

Subject of the invention is a process for the stabilization of polyethylene, characterized by the use of a combination COMB of compounds, the combination COMB comprising a component A, a component B and a component D;
the component A comprising a compound of formula (I), which is obtainable by reacting PCl₃ with a compound of formula (Ia);
the component B being selected from the group consisting of the compounds of formula (II), (IV) and (IX);
the component D being selected from the group consisting of the compounds of formula (XXV), (XXVI), (XXVII), (XXVIII), (XXIX), (XXXI) and (LIII)
and the combination of the compounds of formulae (XXV) and (XXVIII); and optionally comprising at least one component selected from the group consisting of component C, component E and component F;
the component C being a primary sterically hindered phenol based antioxidant,
the component E being a UV absorber, and
the component F being an anti-acid.

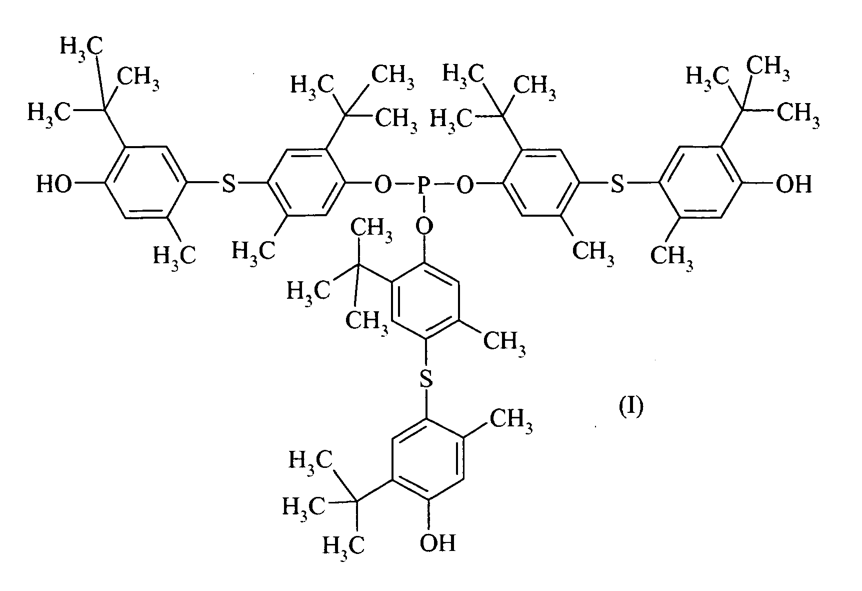

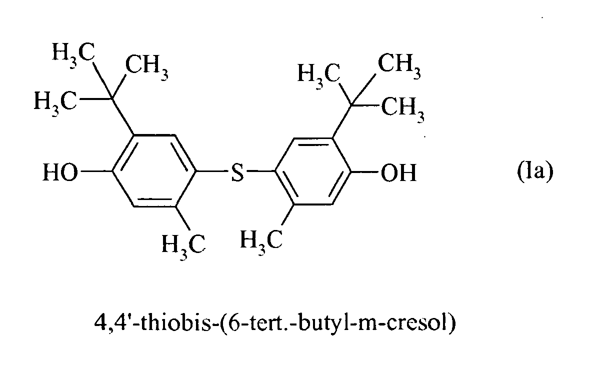

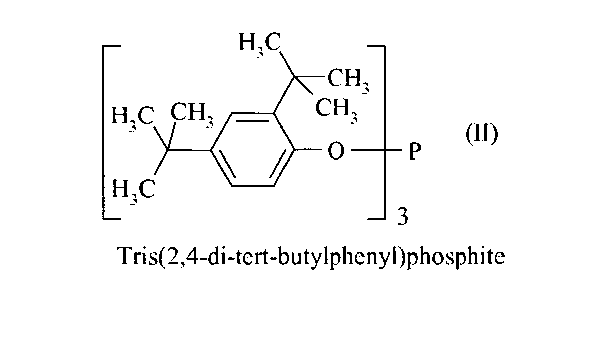

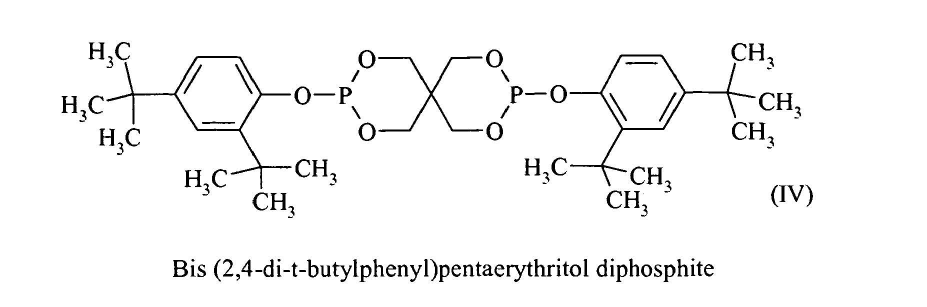

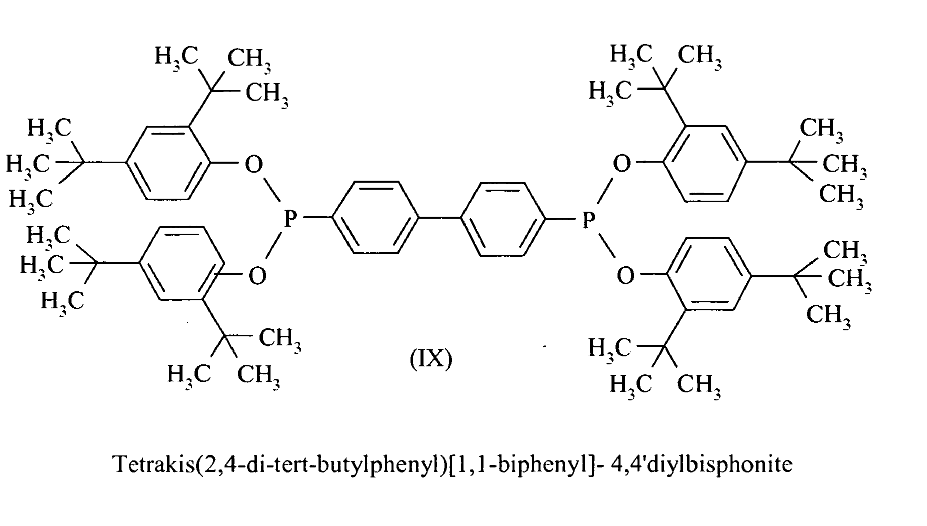

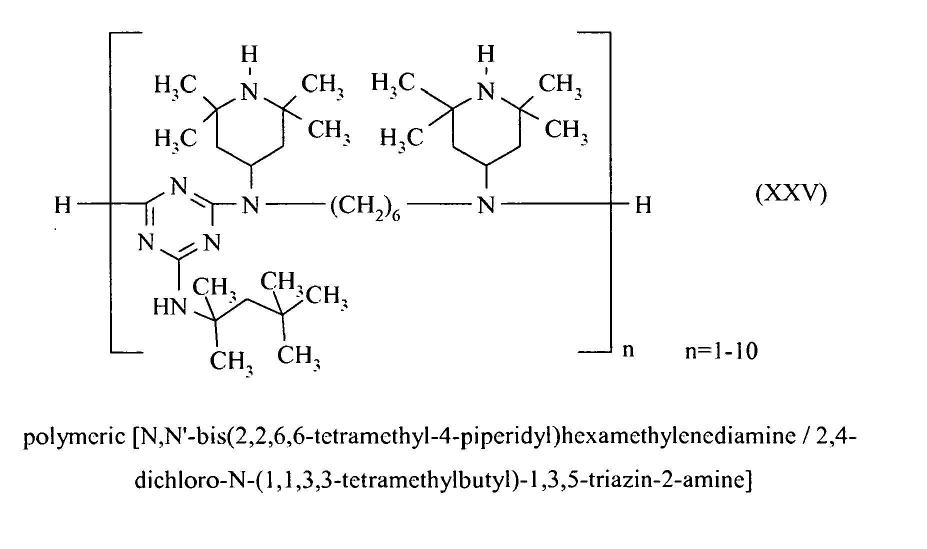

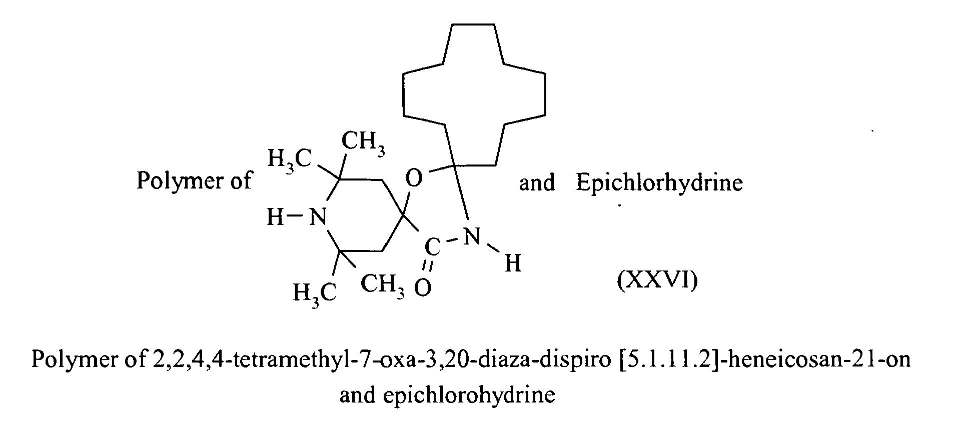

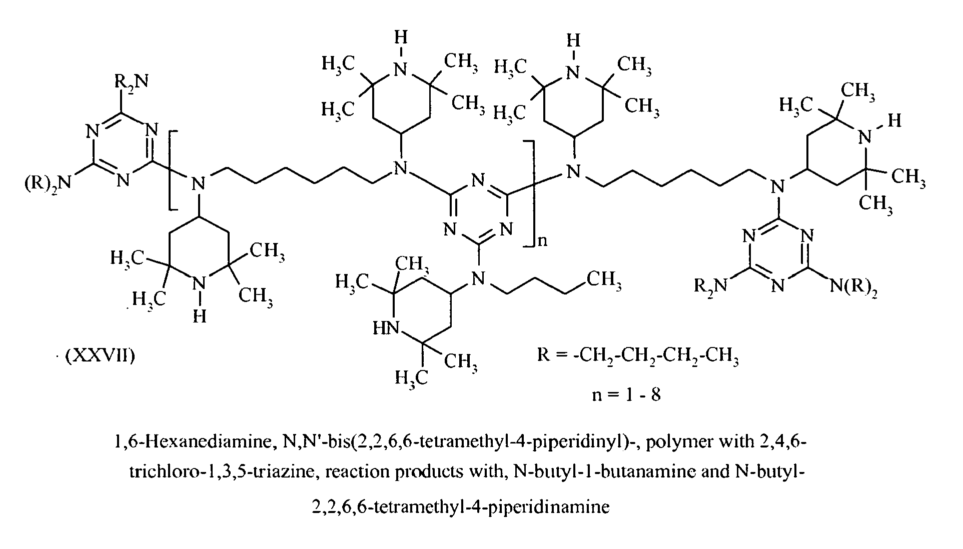

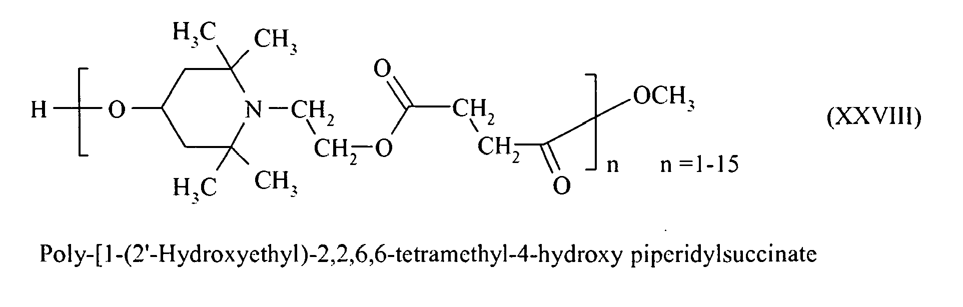

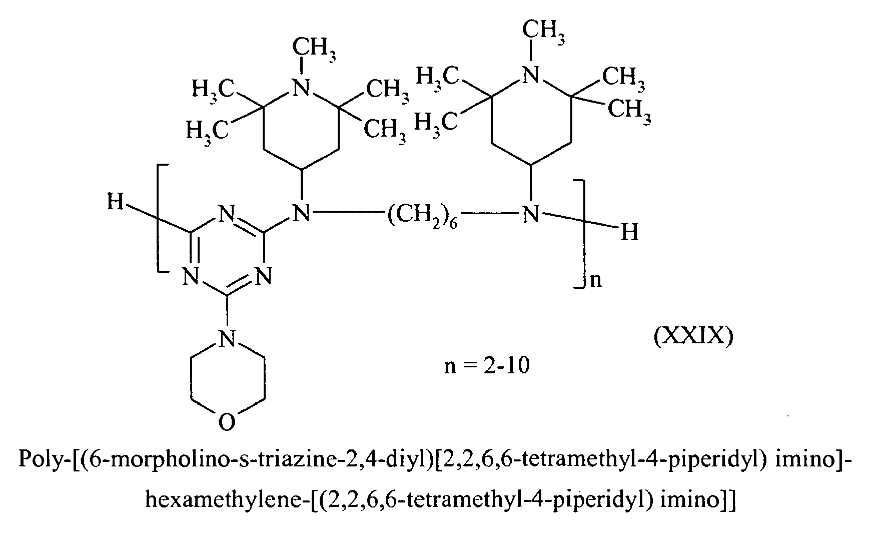

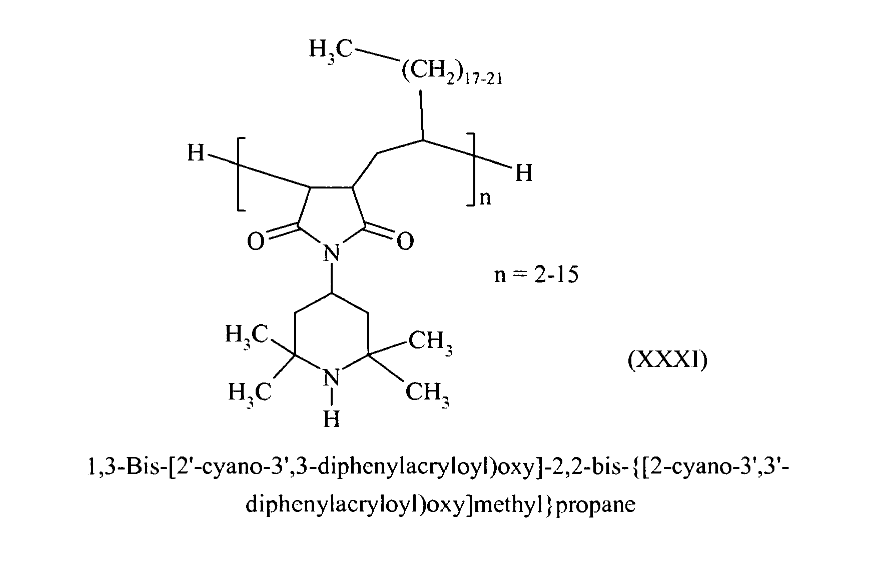

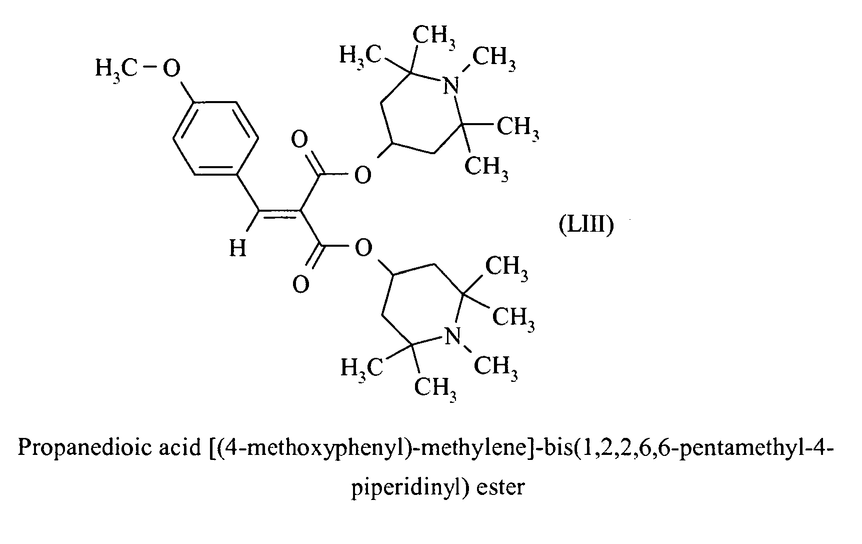

In a preferable embodiment, the combination COMB comprises the component F.

In another preferable embodiment, the combination COMB comprises the component C.

In a more preferable embodiment, the combination COMB comprises the component C and the component F.

The components A, B, C, D, E and F are known components from literature such as "Plastics Additives Handbook", 5th ed., edited by H. Zweifel, Hanser Publishers, Munich (2001). In principal all the components A, B, C and D, which are cited in the "Plastics Additives Handbook", can be used.

The component A preferably contains at least 10% by weight, preferably 20% by weight, more preferably 30% by weight, even more preferably 40% by weight, especially 50% by weight, based on the total weight of the component A, of the compound of formula (I). The remaining part of the component A consists usually of other products which form during the manufacture of the compound of formula (I).

The component A comprising the compound of formula (I) is preferably the commercially available product Hostanox^{®} OSP-1.

The component A can also consist of the compound of formula (I).

Preferably, the component B is the compound of formula (II) (preferably Hostanox^{®} PAR 24) or the compound of formula (IX) (preferably Sandostab^{®} P-EPQ).

Preferably, the component D is the compound of formula (XXVI) (preferably Hostavin^{®} N30).

In all embodiments and preferred embodiments of the invention, preferably the component C is selected from the group consisting of compounds of formulae (XI), (XII), (XIII), (XIV), (XV), (XVI), (XVII), (XVIII), (XIX), (XXXII), (LXXIII), (LXXIV) and (LXXV); 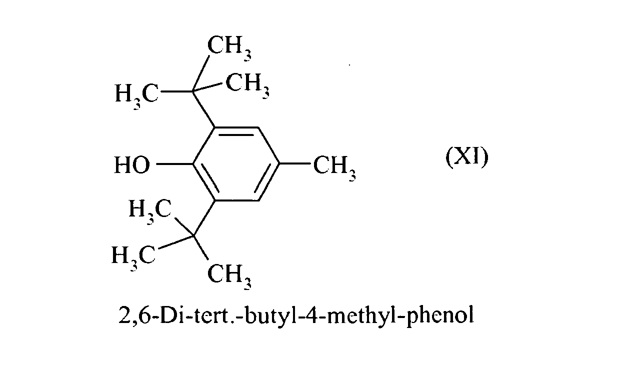 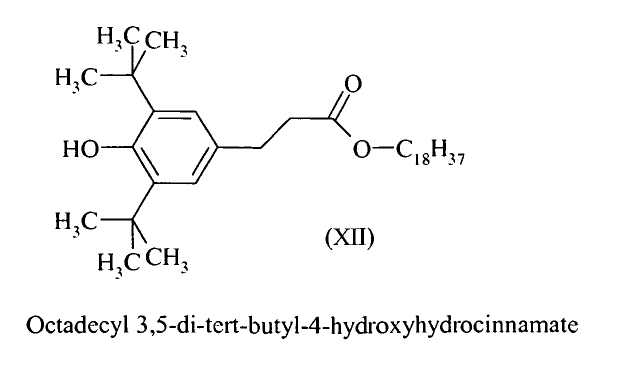 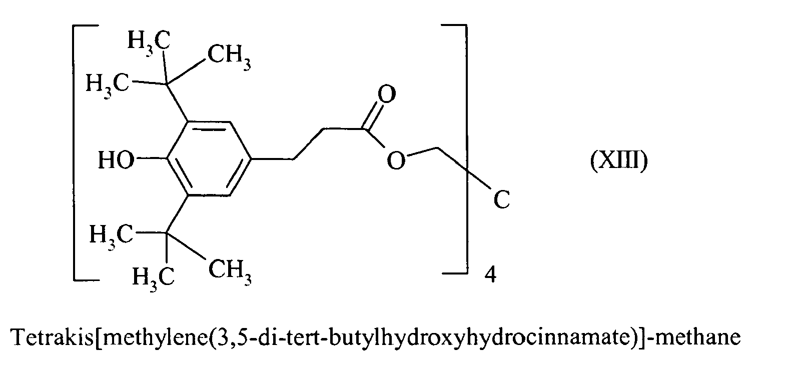 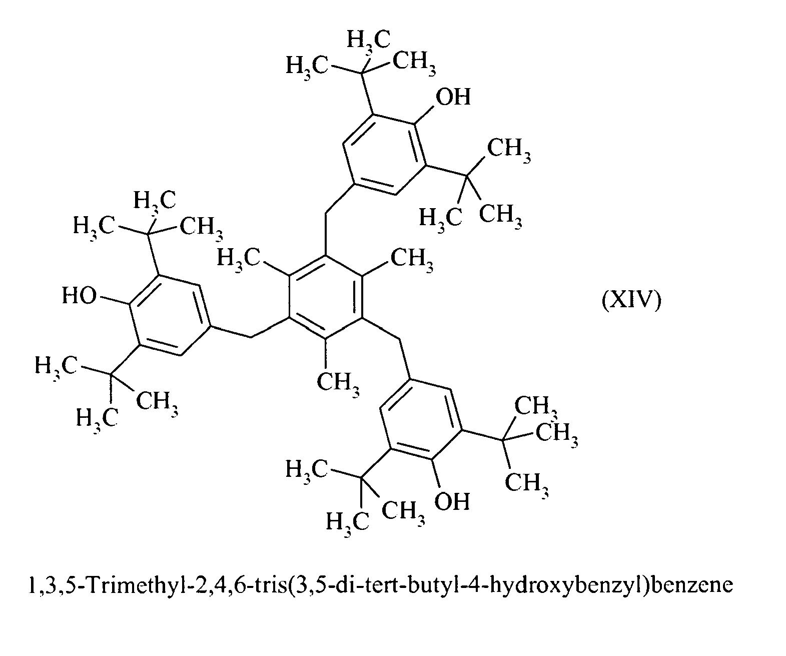 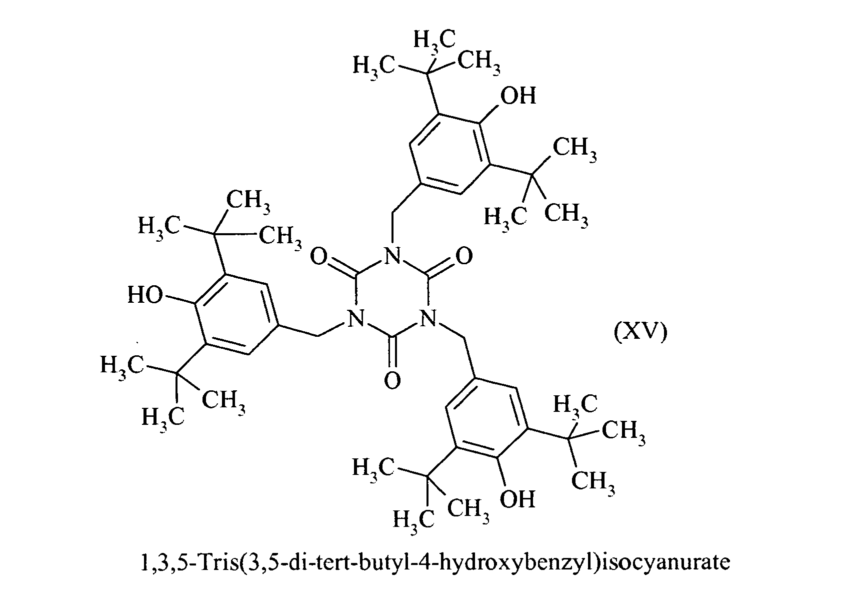 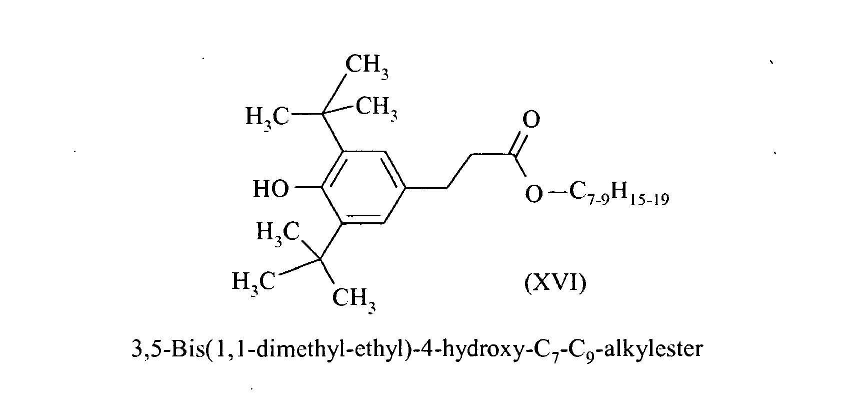 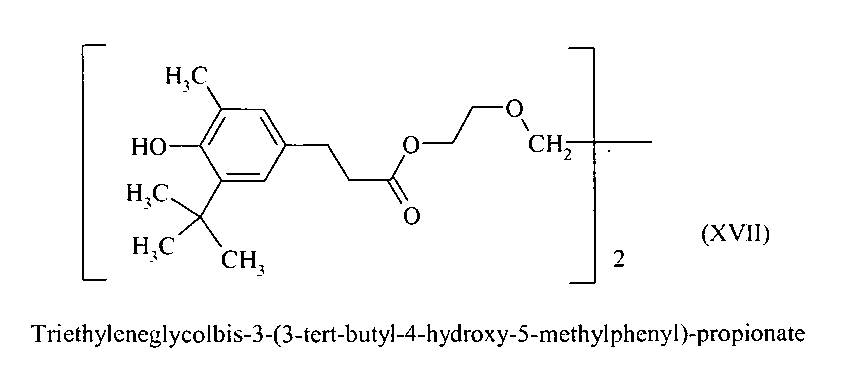 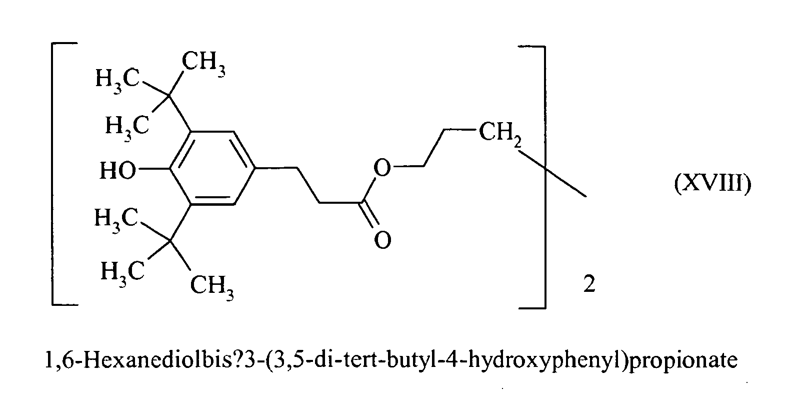 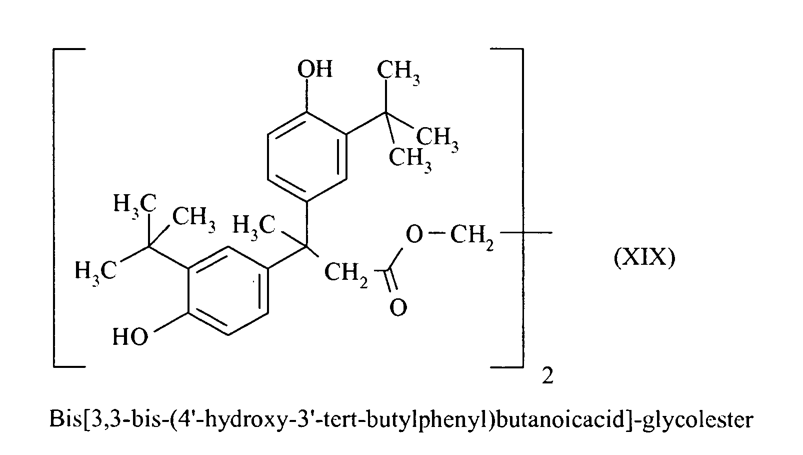 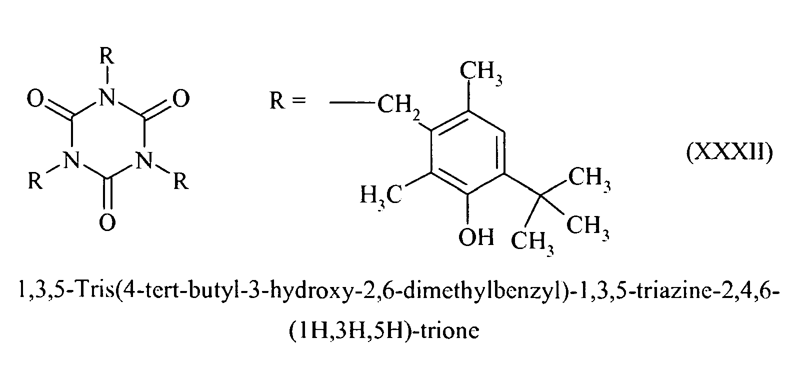 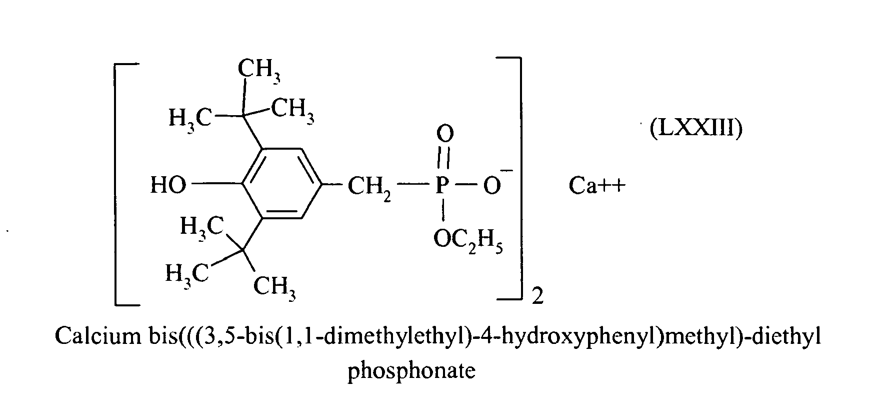 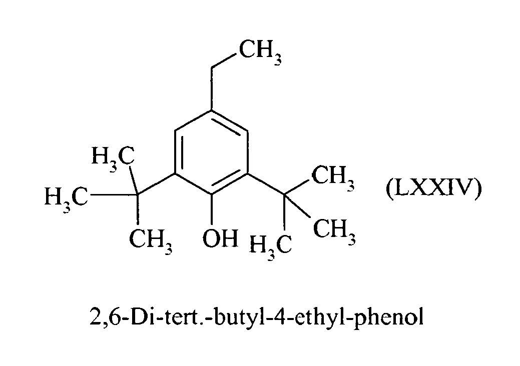 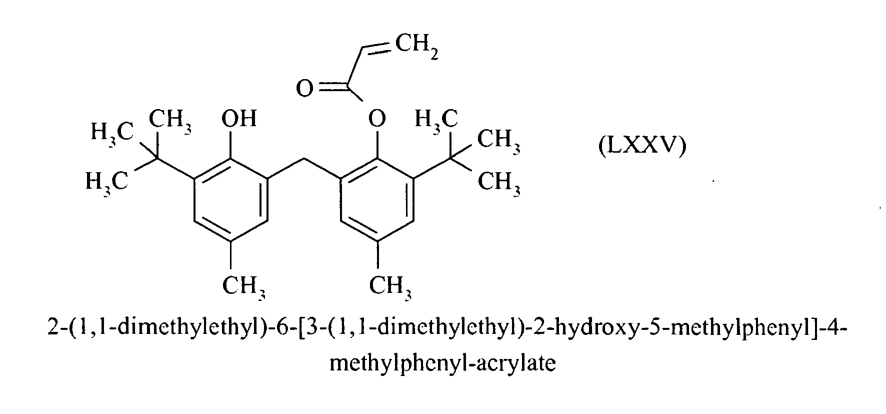 more preferably component C is selected from the group consisting of compounds of formulae (XII), (XIII), (XIV), (XV), (XIX) and (XXXII);
even more preferably component C is selected from the group consisting of the compound of formula (XII) (preferably Hostanox^{®} O16), the compound of formula (XIII) (preferably Hostanox^{®} O10) and the compound of formula (XIX) (preferably Hostanox^{®} O3);
especially preferably component C is the compound of formula (XII) (preferably Hostanox^{®} O16).

In all embodiments and preferred embodiments of the invention, preferably the component E is selected from the group consisting of hydroxybenzotriazoles, hydroxybenzophenones, hydroxyphenyl triazines, cyanoacrylates, cinnamic acid derivatives, benzylidenemalonates, oxalanilides, benzoxazinones, zinc oxides, titaniumdioxides, carbonblack and nickel quenchers;
more preferably the component E is selected from the group consisting of hydroxybenzotriazoles, hydroxybenzophenones, hydroxyphenyl triazines and benzylidenemalonates;
even more preferably the component E is selected from the group consisting of compounds of formulae (XXXV), (XXXVI), (XXXVII), (XXXVIII), (XXXIX), (XL), (XLI), (XLIII), (XLIV), XLV), (XLVI), (XLVII), (XLVIII), (XLIX), (L), (LI), (LII), (LIII), (LIV), (LV), (LVI), (LVII), (LVIII), (LIX) and (LXXII); 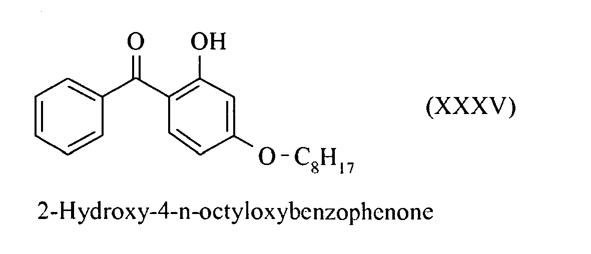 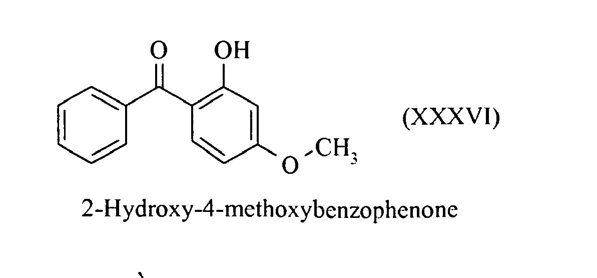 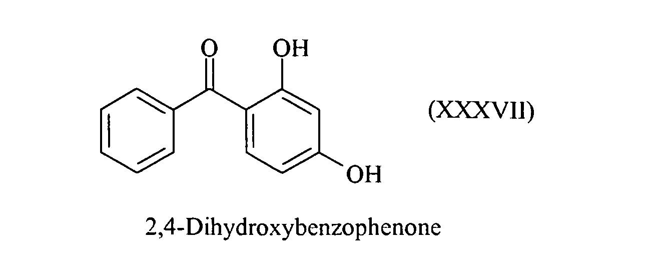 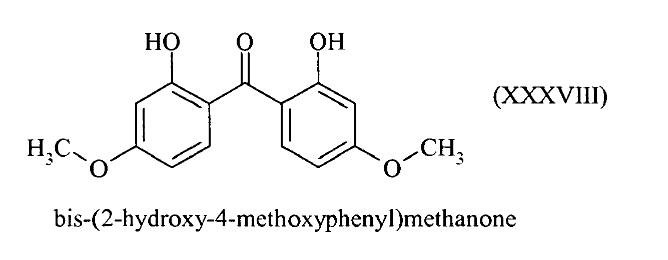 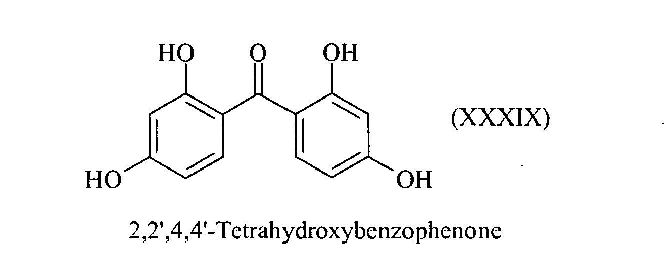 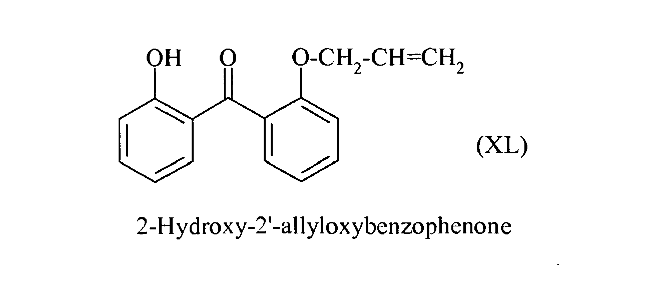 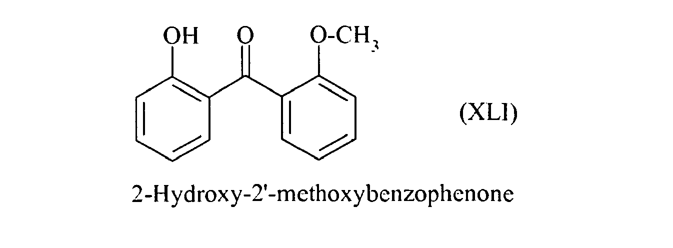 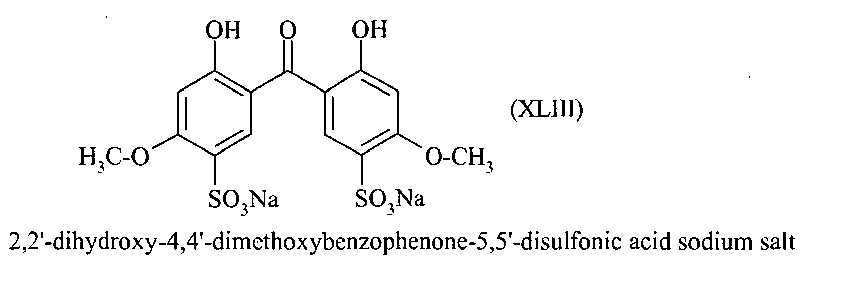 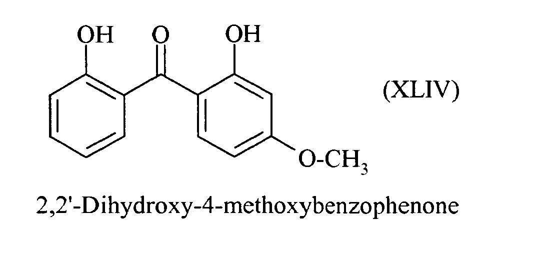 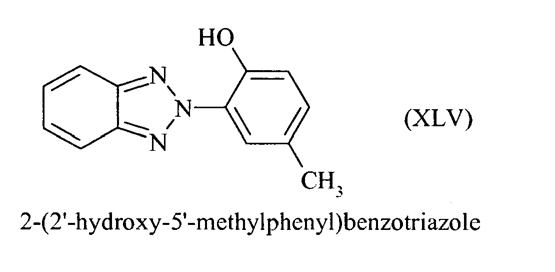 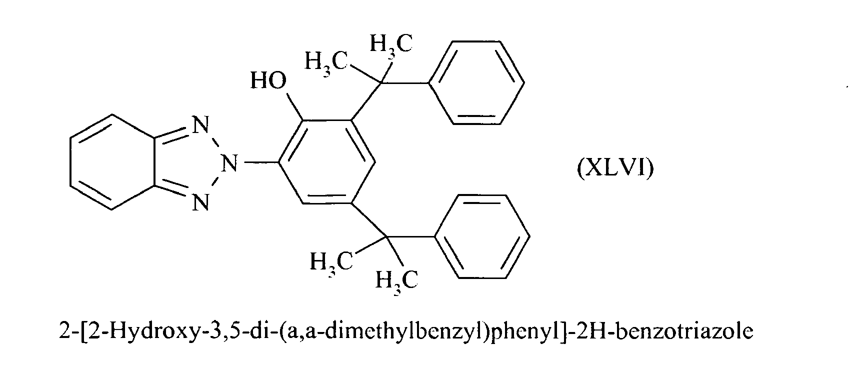 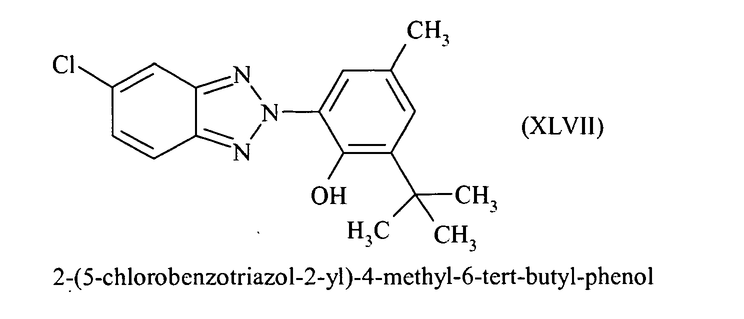 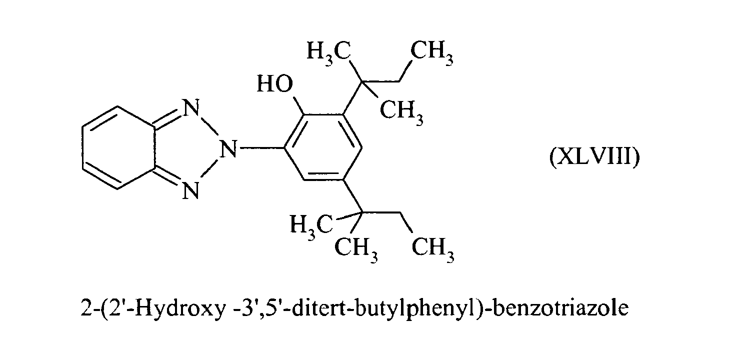 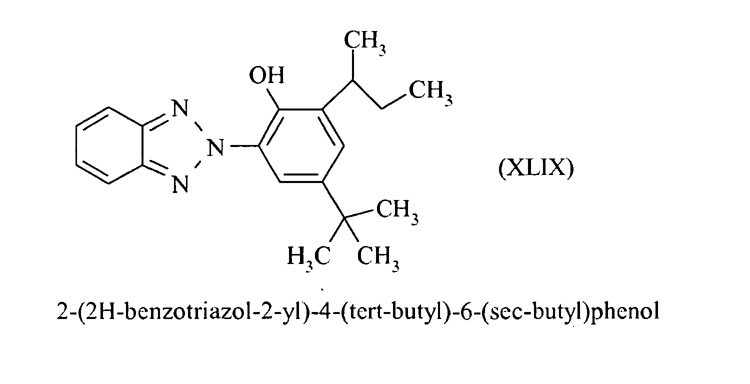 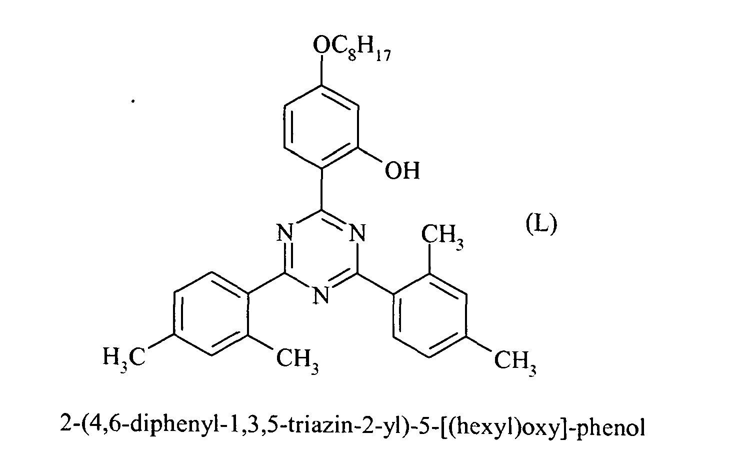 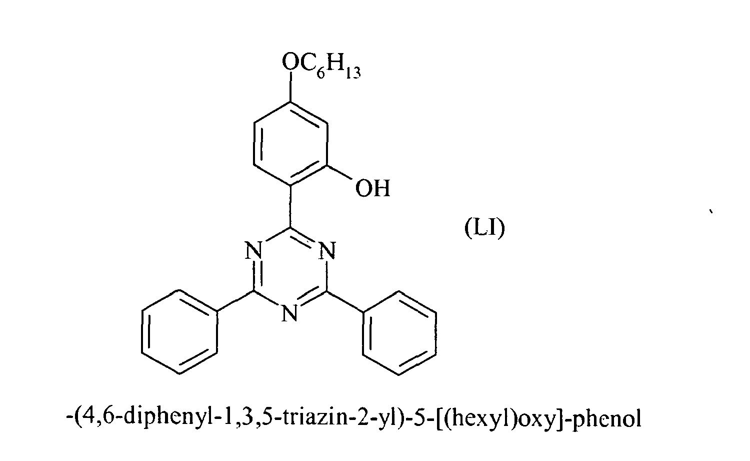 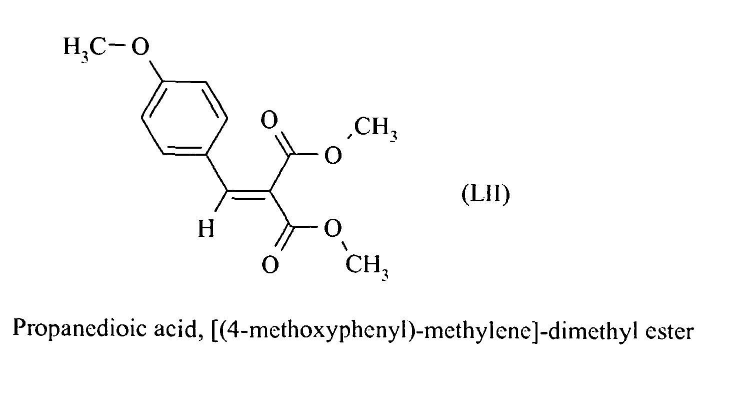 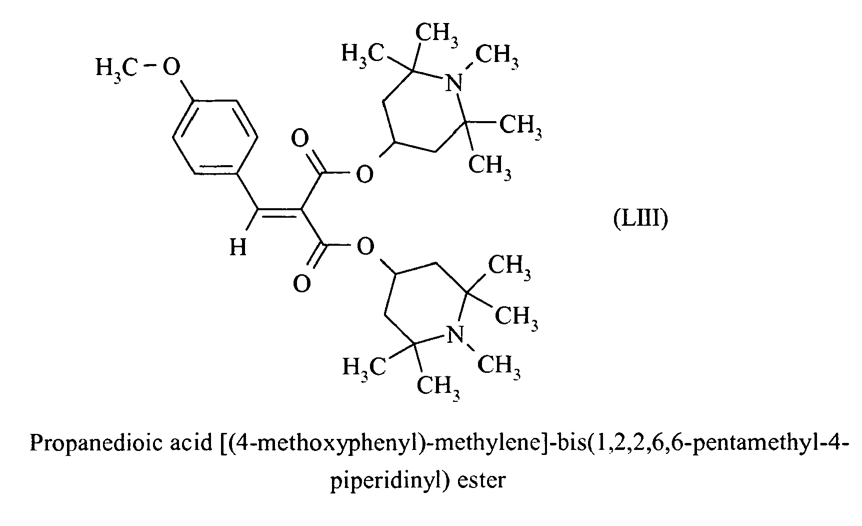 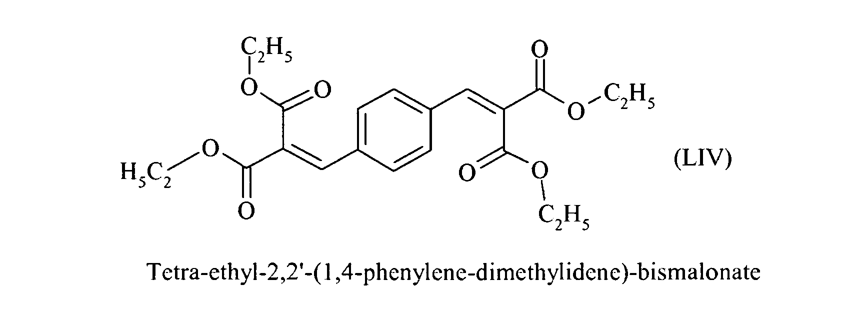 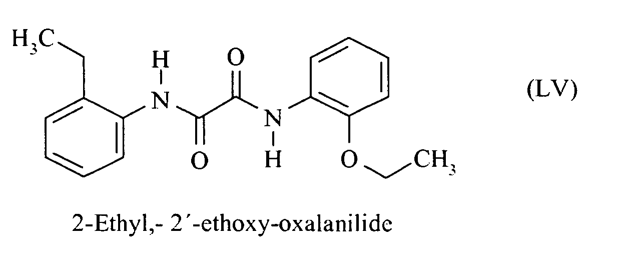 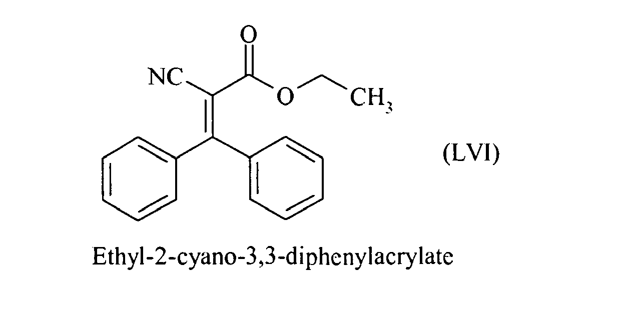 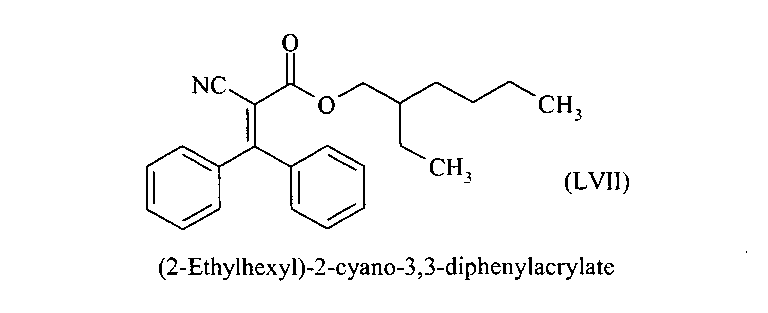 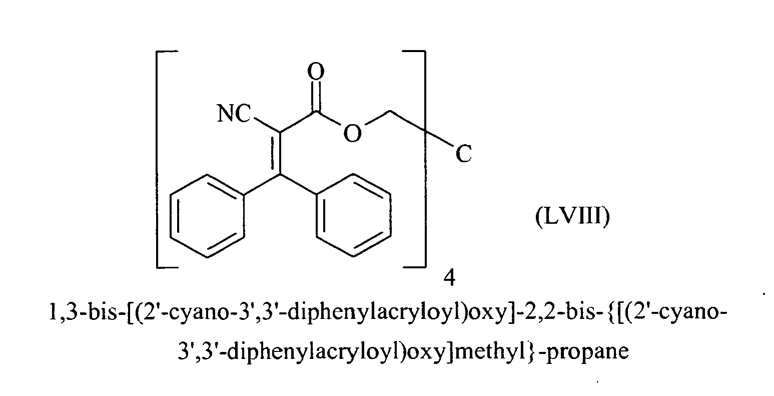 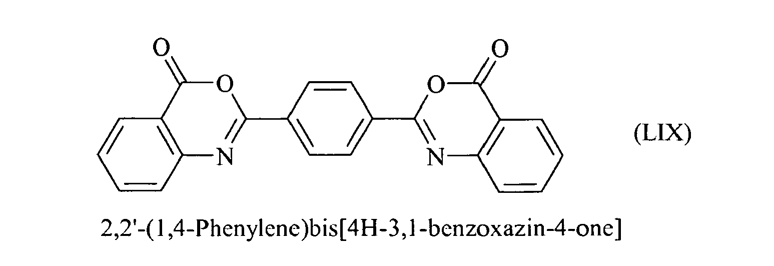 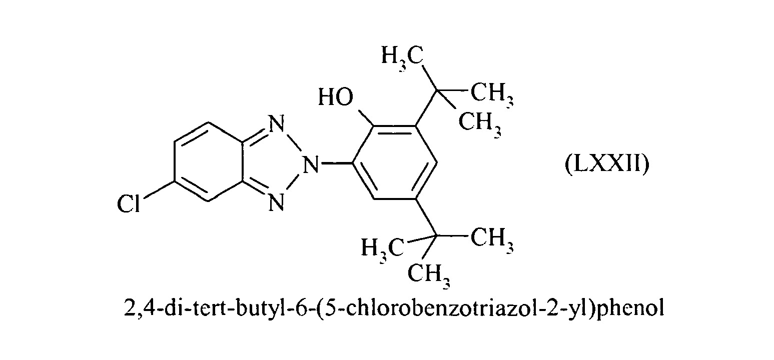 especially preferably the component E is selected from the group consisting of compounds of formulae (XXXV), (XLVII), (XLVIII), (L), (LI), and (LXXII).

In all embodiments and preferred embodiments of the invention, preferably the component F is selected from the group consisting of calciumlactate of formula (LX), hydrotalcites, sodium benzoates, zinc oxides of formula (LXIX) and metal stearates; the hydrotalcites being preferably selected from the group consisting of formula (LXI), (LXII), (LXIII) and (LXIV); the sodium benzoates being preferably of formula (LXV); the metal stearates preferably being selected from the group consisting of calcium stearates of formula (LXVI), zinc stearates of formula (LXVII) or sodium stearate of formula (LXVIII), more preferably zinc stearates;

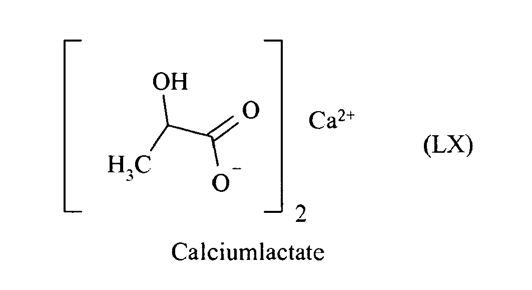

{Mg₆Al₂(OH)₁₆CO₃- 4H₂O}

(LXI), Natural Mineral Hydrotalcite

{Mg_{4.5}Al₂(OH)₁₃CO₃. 3.5H₂O}

(LXII), preferably synthetic Hydrotalcite DHT-4A

{Mg_{4.35}Al₂(OH)_{11.36}(CO₃)_{1.67}. xH₂O}

(LXIII), preferably synthetic Hydrotalcite L-55RII

{Mg₄Al₂(OH)₁₂CO₃. 2.85H₂O}

(LXIV), preferably synthetic Hydrotalcite Baeropol MC 6280

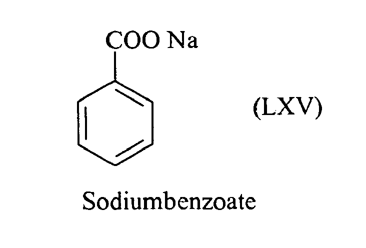

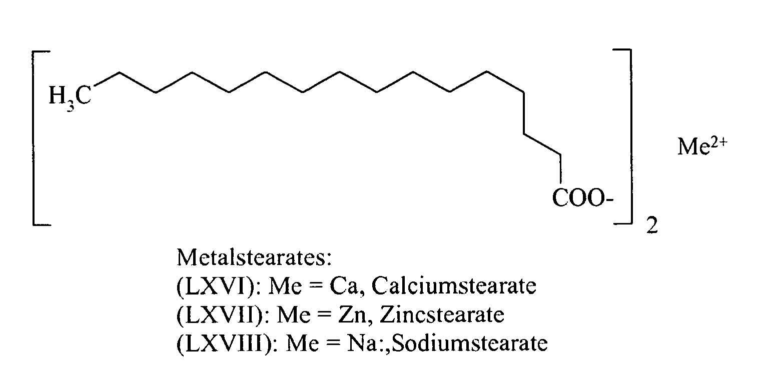

ZnO

(LXIX), Zinc Oxide
more preferably the component F is ZnO, a hydrotalcite or a metal stearate; the hydrotalcite being preferably selected from the group consisting of formula (LXI), (LXII), (LXIII) and (LXIV), more preferably being a hydrotalcite of formula (LXII); the metal stearate preferably being a zinc stearate, a calcium stearate or a sodium stearate, more preferably a zinc stearate;
even more preferably the component F is ZnO, a hydrotalcite of formula (LXII), or a metal stearate; the metal stearate preferably being a zinc stearate, a calcium stearate or a sodium stearate, more preferably a zinc stearate.
still even more preferably the component F is a metal stearate; the metal stearate preferably being a zinc stearate, a calcium stearate or a sodium stearate, more preferably a zinc stearate.

Especially preferably, subject of the invention is a process for the stabilization of polyethylene, characterized in a use of a combination COMB of compounds, the combination COMB comprising
a component A, the component A comprising a compound of formula (I);
a component B, the component B being selected from the group consisting of compounds of formula (II), (IV) and (IX), preferably of formula (II) and (IX); and
a component D, the component D is a polymer of 2,2,4,4-tetramethyl-7-oxa-3,20-diaza-dispiro [5.1.11.2]-heneicosan-21-on and epichlorohydrine;
and optionally at least one component selected from the group consisting of
component C, the component C being selected from the group consisting of octadecyl 3,5-di-tert-butyl-4-hydroxyhydrocinnamate, tetrakis[methylene(3,5-di-tert-butylhydroxyhydrocinnamate)]-methane and bis[3,3-bis-(4'-hydroxy-3'-tert-butylphenyl)butanoicacid]-glycolester;
component E, the component E being selected from the group consisting of 2-Hydroxy-4-*n*-octyloxybenzophenone, 2-(5-chlorobenzotriazol-2-yl)-4-methyl-6-tert-butylphenol, 2-(2'-Hydroxy -3' ,5'-ditert-butylphenyl)- benzotriazole, 2-[4,6-Bis(2,4-dimethylphenyl)- 1,3,5-triazin-2-yl]-5-(octyloxy) phenol, 2-(4,6-diphenyl-1,3,5-triazin-2-yl)-5-[(hexyl)oxy]-phenol and 2,4-di-tert-butyl-6-(5 chlorobenzotriazol-2-yl)phenol; and
component F, the component F being an metal stearate.

More especially preferably, subject of the invention is a process for the stabilization of polyethylene, characterized in a use of a combination COMB of compounds, the combination COMB comprising
a component A, the component A comprising a compound of formula (I);
a component B, the component B being selected from the group consisting of compounds of formula (II), (IV) and (IX), preferably of formula (II) and (IX);
a component C, the component C being selected from the group consisting of octadecyl 3,5-di-tert-butyl-4-hydroxyhydrocinnamate, tetrakis[methylene(3,5-di-tert-butylhydroxyhydrocinnamate)]-methane or bis[3,3-bis-(4'-hydroxy-3'-tert-butylphenyl)butanoicacid]-glycolester; and
a component D, the component D is a polymer of 2,2,4,4-tetramethyl-7-oxa-3,20-diaza-dispiro [5.1.11.2]-heneicosan-21-on and epichlorohydrine;
and optionally at least one component selected from the group consisting of component E, the component E being selected from the group consisting of 2-Hydroxy-4-*n*-octyloxybenzophenone, 2-(5-chlorobenzotriazol-2-yl)-4-methyl-6-tert-butylphenol, 2-(2'-Hydroxy -3' ,5'-ditert-butylphenyl)- benzotriazole, 2-[4,6-Bis(2,4-dimethylphenyl)- 1,3,5-triazin-2-yl]-5-(octyloxy) phenol, 2-(4,6-diphenyl-1,3,5-triazin-2-yl)-5-[(hexyl)oxy]-phenol and 2,4-di-tert-butyl-6-(5 chlorobenzotriazol-2-yl)phenol; and
component F, the component F being an metal stearate.

Also more especially preferably, subject of the invention is a process for the stabilization of polyethylene, characterized in a use of a combination COMB of compounds, the combination COMB comprising
a component A, the component A comprising a compound of formula (I);
a component B, the component B being selected from the group consisting of compounds of formula (II), (IV) and (IX), preferably of formula (II) and (IX);
a component D, the component D is a polymer of 2,2,4,4-tetramethyl-7-oxa-3,20-diaza-dispiro [5.1.11.2]-heneicosan-21-on and epichlorohydrine;
a component F, the component F being an metal stearate, preferably zinc stearate, calcium stearate or sodium stearate, more preferably zinc stearate;
and optionally at least one component selected from the group consisting of component C, the component C being selected from the group consisting of octadecyl 3,5-di-tert-butyl-4-hydroxyhydrocinnamate, tetrakis[methylene(3,5-di-tert-butylhydroxyhydrocinnamate)]-methane and bis[3,3-bis-(4'-hydroxy-3'-tert-butylphenyl)butanoicacid]-glycolester; and
component E, the component E being selected from the group consisting of 2-Hydroxy-4-*n*-octyloxybenzophenone, 2-(5-chlorobenzotriazol-2-yl)-4-methyl-6-tert-butylphenol, 2-(2'-Hydroxy -3' ,5'-ditert-butylphenyl)- benzotriazole, 2-[4,6-Bis(2,4-dimethylphenyl)- 1,3,5-triazin-2-yl]-5-(octyloxy) phenol, 2-(4,6-diphenyl-1,3,5-triazin-2-yl)-5-[(hexyl)oxy]-phenol and 2,4-di-tert-butyl-6-(5 chlorobenzotriazol-2-yl)phenol.

Even more especially preferably, subject of the invention is a process for the stabilization of polyethylene, characterized in a use of a combination COMB of compounds, the combination COMB comprising
a component A, the component A comprising a compound of formula (I);
a component B, the component B being selected from the group consisting of compounds of formula (II), (IV) and (IX), preferably of formula (II) and (IX);
a component C, the component C being selected from the group consisting of octadecyl 3,5-di-tert-butyl-4-hydroxyhydrocinnamate, tetrakis[methylene(3,5-di-tert-butylhydroxyhydrocinnamate)]-methane and bis[3,3-bis-(4'-hydroxy-3'-tert-butylphenyl)butanoicacid]-glycolester;
a component D, the component D is a polymer of 2,2,4,4-tetramethyl-7-oxa-3,20-diaza-dispiro [5.1.11.2]-heneicosan-21-on and epichlorohydrine; and
a component F, the component F being an metal stearate, preferably zinc stearate, calcium stearate or sodium stearate, more preferably zinc stearate;
and optionally at least one component selected from the group consisting of component E, the component E being selected from the group consisting of 2-Hydroxy-4-*n*-octyloxybenzophenone, 2-(5-chlorobenzotriazol-2-yl)-4-methyl-6-tert-butylphenol, 2-(2'-Hydroxy -3' ,5'-ditert-butylphenyl)- benzotriazole, 2-[4,6-Bis(2,4-dimethylphenyl)- 1,3,5-triazin-2-yl]-5-(octyloxy) phenol, 2-(4,6-diphenyl-1,3,5-triazin-2-yl)-5-[(hexyl)oxy]-phenol and 2,4-di-tert-butyl-6-(5 chlorobenzotriazol-2-yl)phenol.

A further subject of the invention is a composition comprising
a component A, the component A comprising a compound of formula (I);
a component B, the component B being selected from the group consisting of compounds of formula (II), (IV) and (IX), preferably of formula (II) and (IX);
a component D, the component D being selected from the group consisting of the compounds of formula (XXV), (XXVI), (XXVII), (XXVIII), (XXIX), (XXXI) and (LIII) and the combination of the compounds of formulae (XXV) and (XXVIII).

A further subject of the invention is a composition comprising
a component A, the component A comprising a compound of formula (I);
a component B, the component B being selected from the group consisting of compounds of formula (II), (IV) and (IX), preferably of formula (II) and (IX);
a component D, the component D being selected from the group consisting of the compounds of formula (XXV), (XXVI), (XXVII), (XXVIII), (XXIX), (XXXI) and (LIII) and the combination of the compounds of formulae (XXV) and (XXVIII); and
a component F, the component F being a metal stearate, the metal stearate preferably being a zinc stearate, a calcium stearate or a sodium stearate, more preferably a zinc stearate.

A further subject of the invention is a composition comprising
a component A, the component A comprising a compound of formula (I);
a component B, the component B being selected from the group consisting of compounds of formula (II), (IV) and (IX), preferably of formula (II) and (IX);
a component D, the component D being a polymer of 2,2,4,4-tetramethyl-7-oxa-3,20-diaza-dispiro [5.1.11.2]-heneicosan-21-on and epichlorohydrine.

A further subject of the invention is a composition comprising
a component A, the component A comprising a compound of formula (I);
a component B, the component B being selected from the group consisting of compounds of formula (II), (IV) and (IX), preferably of formula (II) and (IX);
a component D, the component D being a polymer of 2,2,4,4-tetramethyl-7-oxa-3,20-diaza-dispiro [5.1.11.2]-heneicosan-21-on and epichlorohydrine; and
a component F, the component F being a metal stearate, the metal stearate preferably being a zinc stearate, a calcium stearate or a sodium stearate, more preferably a zinc stearate.

A further subject of the invention is a composition comprising
a component A, the component A comprising a compound of formula (I);
a component B, the component B is a compound of formula (II) or (IX);
a component D, the component D being a polymer of 2,2,4,4-tetramethyl-7-oxa-3,20-diaza-dispiro [5.1.11.2]-heneicosan-21-on and epichlorohydrine.

A further subject of the invention is a composition comprising
a component A, the component A comprising a compound of formula (I);
a component B, the component B is a compound of formula (II) or (IX);
a component D, the component D being a polymer of 2,2,4,4-tetramethyl-7-oxa-3,20-diaza-dispiro [5.1.11.2]-heneicosan-21-on and epichlorohydrine; and
a component F, the component F being a metal stearate, the metal stearate preferably being a zinc stearate, a calcium stearate or a sodium stearate, more preferably a zinc stearate.

The component A in the compositions comprising the components A, B and D and in the compositions comprising the components A, B, D and F, preferably contains at least 10% by weight, preferably 20% by weight, more preferably 30% by weight, even more preferably 40% by weight, especially 50% by weight, based on the total weight of the component A, of the compound of formula (I). Preferably, the compound of formula (I) is obtainable by reacting PCl₃ with a compound of formula (Ia). The remaining part of the component A consists usually of other products which form during the manufacture of the compound of formula (I). The component A comprising the compound of formula (I) is preferably the commercially available product Hostanox^{®} OSP-1.

The component A can also consist of the compound of formula (I).

The compositions comprising the components A, B and D and the compositions comprising the components A, B, D and F consist of at least 50%, preferably 75%, more preferably 90% by weight, based on the total weight of the composition, of the sum of the weights of the components A, B and D, or of the sum of the weights of the components and A, B, D, and F respectively. The compositions comprising the components A, B and D and the compositions comprising the components A, B, D and F can also consist only the components A, B and D and A, B, D, and F respectively. The relative ratios of the combined weights of components B and D or of components B, D, and F to the weight of the component A can be of from between 1 to 20 and 20 to 1, preferably of from between 1 to 10 and 10 to 1, more preferably of from between 1 to 5 and 5 to 1.

The compositions comprising the components A, B and D and the compositions comprising the components A, B, D and F can comprise further components, preferably selected from the group consisting of primary sterically hindered phenol based antioxidants, anti-acids, UV absorbers, metal deactivators, sulfur based thioethers, antistatics and lubricants.

The compositions comprising the components A, B and D and the compositions comprising the components A, B, D and F can be prepared by physically combining the individual components, preferably by blending or mixing, the blending or mixing is preferably done in the solid or molten state of the compounds; preferably the blending or mixing is done by dry blending. Therefore a further subject of the invention is a process for the preparation of the compositions comprising the components A, B and D or of the compositions comprising the components A, B, D and F, by physically combining the individual components.

A further subject of the invention is the use of the compositions comprising the components A, B and D or of the compositions comprising the components A, B, D and F, for the stabilization of polyethylene, preferably during rotomolding of polyethylene.

A further subject of the invention are articles of polyethylene, which have been stabilized during their manufacture by the addition of compositions comprising the components A, B and D, or of the compositions comprising the components A, B, D and F, to the polyethylene during the processing, preferably during rotomolding, of the polyethylene.

Preferably the polyethylene is selected from the group consisting of HDPE, MDPE, LDPE, LLDPE and copolymers of ethylene with butene, hexene or octene, more preferably HDPE, MDPE, LLDPE and their butene, hexene or octene based copolymers, even more preferably MDPE, LLDPE and their ethylene hexene or their ethylene octene copolymers.

Preferably MDPE has a density of from 0.92 to 0.95 g/cm³, whereas LLDPE has preferably densities of from 0.91 to 0.94 g/cm³

The component A is used in an amount preferably of from 0.01 to 1.0 % by weight more preferably of from 0.02 to 0.2 % by weight, based on the weight of the polyethylene.

The components B, C, D, E and F are each individually and independently from each other used in an amount preferably of from 0.01 to 5 % by weight, more preferably of from 0.02 to 0.5 % by weight, based on the weight of the polyethylene.

It is possible to use more than one of each component B, C, D, E and/or F, for example the component A together with two different components B and one component D. In this case, the sum of the weights of the combined components A is according to the above described weight ranges based on the weight of the polyethylene; the same applies for the sum of the weights of the combined components each of B, C, D, E and F.

The components A, B, C, D, E and/or F can be added to the polyethylene as individual components, in form of compositions, in form of one or more masterbatches or in a combination of these possibilities; each of the compositions or masterbatches can comprise one or more of the components A, B, C, D, E and/or F in all possible combinations.

The addition of the component A, B, C, D, E and/or F can be done at any time before or during the processing of the polyethylene.

Preferably the component A and the components B, C, D E and F, as individual components, in the form of a masterbatch or in a combination of both, are added before or during the processing, preferably before or during extrusion, more preferably melt extrusion, of the polyethylene to the polyethylene, resulting in an polyethylene composition comprising the polyethylene and the components A to F, this polyethylene composition is often referred to as polyethylene compound. Preferably this polyethylene compound will be grinded prior to further processing, which is preferably rotomolding, extrusion, melt extrusion, extrusion blow molding, injection blow molding, injection molding and film blowing, more preferably rotomolding.

The combination of the component A with the components B, C, D, E and/or F in all the mentioned preferred embodiments and combinations is used for the stabilization of polyethylene during processing of the polyethylene, preferably as a process stabilizer to improve the heat stability, the resistance against oxidation, to prevent the discoloration during the processing of the polyethylene and to improve the demolding-ability at the end of the processing of the polyethylene. Preferably the combination of the component A, B, C, D, E and/or F in all the mentioned preferred embodiments and combinations is used for the stabilization of polyethylene, and is added before or during rotomolding, extrusion, melt extrusion, extrusion blow molding, injection blow molding, injection molding and film blowing, more preferably before or during rotomolding.

The rotomolding of the polyethylene is carried out at temperatures preferably above 250°C, more preferably above 280°C, even more preferably above 300°C.

The rotomolding of the polyethylene is carried out with a processing time preferably of more than 5 minutes, more preferably of more than 10 minutes and even more preferably of more than 20 minutes.

The combination COMB of the component A with the components B, C, D, E and/or F in all the mentioned preferred embodiments and combinations may contain further commonly used processing additives like metal deactivators, sulfur based thioethers, antistatics or lubricants.

A further subject of the invention are articles of polyethylene, which have been manufactured by anyone of the described processes, and which are thereby stabilized by a combination COMB of compounds, the combination COMB being in all the mentioned preferred embodiments and combinations.

Surprisingly the use of the combination of the components A, B and C and/or D and optionally F improves the processability of polyethylene with regard to heat stability and resistance against oxidation. A substantial antioxidative effect, high melt flow stability, reduced tendency for coloration and improved demoldability of the processed polyethylene and of the manufactured articles, especially during wall forming process in the rotomolding process, are observed.

The article discoloration often observed by the increase of the yellowness index (YI) is reduced. The demolding ability (DMA) is improved, which means there will be lower or no need for an internal demolding aid such as a metal stearate, that can adversely affect coloration and melt flow properties.

But also when using a metal stearate, the yellowness index is considerably lowered by the use of the component A. The melt flow index shows an unexpected synergistic effect when using both a metal stearate and the component A.

The combination of the components A, B and C and/or D and optionally F shows improved antioxidative effect, as measured by the oxidative induction time (OIT): During rotomolding process the polymeric article is mainly exposed to heat, which with the processing time leads to the oxidation of the polymer, in other words the degradation of the resin. Oxidative induction time (OIT) is an indicator of the antioxidant efficiency in the resin to prevent oxidation with exposure time, which is a key factor in the rotomolding process.

Also improved melt flow index (MFI) or melt flow rate (MFR) is observed.

### Examples

The yellowness index YI was measured according to DIN 6167 at different exposure times Tₘ. The lower the YI the better.

The melt flow index MFI [g/10min] was determined according to ISO 1133. The higher the MFI the better.

The oxidative induction time OIT, expressed in minutes, was measured using differential scanning calorimetry DSC: the sample was heated into the DSC furnace from 40°C up to 200 °C at 20 °C/min and kept isothermal for 3 min under nitrogen atmosphere. Then the circulating gas was switched to oxygen until oxidation was observed, which is related to an exothermic reaction. The onset time of exothermic reaction determined the OIT value.

The higher the OIT the better.

The demolding-ability DMA was assessed empirically at different exposure times Tₘ and described with the three categories
"E": easy to demold
"M": medium difficult to demold
"D": difficult to demold

### Substances used:

### Polyethylene:

LLDPE-1: ethylene-butene copolymer, d=0.938 g/cm³, MFI=4 g/10 min, rotomolding grade in powder form

### Component A:

Hostanox^{®} OSP1 (OSP-1), comprising the compound of formula (I).

### Components B:

Hostanox^{®} PAR24 (PAR24)
Sandostab^{®} P-EPQ (P-EPQ)

### Components C:

Hostanox^{®} O16 (O16)

### Components D:

Hostavin^{®} N30 (N30)

### Components E

UV absorber

### Components F:

zinc stearate (ZnStearate)

### Examples 1 to 13 for demolding ability and OIT improvement

Mixtures of the LLDPE-1 and of the components have been prepared in a low speed mixer (Kenwood type blender) and poured afterwards in an aluminum pan.

Samples have then been introduced in a ventilated oven at a temperature of 190°C and kept there for Tₘ = 15 min.

OIT values and DMA for different powder mixtures are shown in Table 1:

| **Table 1** | | **OIT** | **DMA** |
|---|---|---|---|
| **Ex.** | **Formulation** | **Tₘ = 15 min** | |
| **1** | LLDPE-1 | 2.14 | D |
| **2** | LLDPE-1 + 500 ppm 016 | 17.11 | M |
| **3** | LLDPE-1 + 500 ppm P-EPQ | 3.75 | D |
| **4** | LLDPE-1 + 500 ppm PAR24 | 2.15 | D |
| **5** | LLDPE-1 + 500 ppm N30 | 2.15 | D |
| **6** | LLDPE-1 + 500 ppm OSP-1 | 23.48 | E |
| **7** | LLDPE-1 + 250 ppm PAR24 + 250 ppm P-EPQ | 2.13 | D |
| **8** | LLDPE-1 + 500 ppm N30 + 500 ppm PAR24 + 500 ppm P-EPQ | 5.88 | M |
| **9** | LLDPE-1 + 500 ppm N30 + 1000 ppm PAR24 | 2.15 | M |
| **10** | LLDPE-1 + 500 ppm 016 + 1000 ppm OSP-1 | 75.67 | E |
| **11** | LLDPE-1 + 500 ppm N30 + 250 ppm OSP-1 | 51.43 | E |
| **12** | LLDPE-1 + 500 ppm N30 + 250 ppm PAR24 + 250 ppm OSP-1 | 99.26 | E |
| **13** | LLDPE-1 + 500 ppm N30 + 250 ppm P-EPQ + 250 ppm OSP-1 | 41.11 | E |

As a first result Hostanox OSP-1 shows a boosted OIT value when included in the formulation. In addition surprisingly it was observed that all the samples containing OSP-1 were very easy to demold as stated in the table 1, compared to all other formulations.

### Examples 20 to 23 for color stability and demolding ability improvement

Mixtures of the LLDPE-lpolymer and the components have been prepared in a low speed mixer (Kenwood type blender) and afterwards extruded in a single screw extruder and pelletised.

The processed granules were poured in an aluminum pan.

Samples have then been introduced in a ventilated oven at a temperature of 190°C for Tₘ = 30, 60, 90 and 120 min.

Results for YI are given in Table 2.

| **Table 2** | | **YI after Tₘ** | | | |
|---|---|---|---|---|---|
| **Ex.** | **Formulation** | **0.5 hr** | **1 hr** | **1.5 hr** | **2 hr** |
| **20** | 1000ppm PAR24 + 500ppm N30 | 3.07 | 10.44 | 36.67 | 50.1 |
| **21** | 500ppm P-EPQ + 500ppm N30 | 4.66 | 7.52 | 18.91 | 33.32 |
| **22** | 750ppm PAR24 + 250ppm OSP-1 + 500ppm N30 | 4.78 | 5.45 | 6.36 | 7.6 |
| **23** | 500ppm P-EPQ + 250ppm OSP-1 + 500ppm N30 | 3.56 | 4.17 | 4.54 | 4.78 |

Outstanding color stability (resistance to yellowing) for formulation based on Hostanox OSP-1 compared to other formulations including one based on P-EPQ and N30 is observed.

Results for DMA are given in Table 3.

| **Table 3** | | **DMA after Tₘ** | | | |
|---|---|---|---|---|---|
| **Ex.** | **Formulation** | **0.5 hr** | **1 hr** | **1.5 hr** | **2 hr** |
| **20** | 1000ppm PAR24 + 500ppm N30 | D | D | D | D |
| **21** | 500ppm P-EPQ + 500ppm N30 | M | M | M | M |
| **22** | 750ppm PAR24 + 250ppm OSP-1 + 500ppm N30 | E | E | E | M |
| **23** | 500ppm P-EPQ + 250ppm OSP-1 + 500ppm N30 | E | E | E | E |

Samples containing Hostanox OSP-1 showed a much easier demolding ability than other formulations including one based on P-EPQ and N30.

### Examples 30 to 33 for color stability and MFI stability

Mixtures of the LLDPE-1 and the components have been prepared in a low speed mixer (Kenwood type blender) and afterwards extruded in a single screw extruder and pelletised.

The processed granules were poured in an aluminum pan.

Samples have then been introduced in a ventilated oven at a temperature of 190°C for 30, 60, 90 and 120 min.

MFI and YI are shown in Tables 4 and 5.

| **Table 4** | | **Yellowness Index after Tₘ** | | | |
|---|---|---|---|---|---|
| **Ex.** | **Formulation** | **0.5 hr** | **1 hr** | **1.5 hr** | **2 hr** |
| **30** | 500 ppm P-EPQ + 500 ppm N30 | 4.66 | 7.52 | 18.91 | 33.32 |
| **31** | 500 ppm P-EPQ + 500 ppm N30 + 3000 ppm ZnStearate | 0.39 | 8.57 | 33.98 | 50.32 |
| **32** | 500 ppm P-EPQ + 250ppm OSP-1 + 500 ppm N30 | 3.56 | 4.17 | 4.54 | 4.78 |
| **33** | 500 ppm P-EPQ + 250 OSP-1 + 500 ppm N30 + 3000 ppm ZnStearate | 4.77 | 9.91 | 12.27 | 19.2 |

| **Table 5** | | **Melt Flow Index after Tₘ** | | | |
|---|---|---|---|---|---|
| **Ex.** | **Formulation** | **0.5 hr** | **1 hr** | **1.5 hr** | **2 hr** |
| **30** | 500 ppm P-EPQ + 500 ppm N30 | 1.92 | 1.47 | 1.08 | 1.28 |
| **31** | 500 ppm P-EPQ + 500 ppm N30 + 3000 ppm ZnStearate | 2.99 | 2.71 | 2.53 | 2.21 |
| **32** | 500 ppm P-EPQ + 250ppm OSP-1 + 500 ppm N30 | 3.66 | 3.73 | 3.7 | 3.8 |
| **33** | 500 ppm P-EPQ + 250 OSP-1 + 500 ppm N30 + 3000 ppm ZnStearate | 3.72 | 3.2 | 2.76 | 2.25 |

Most formulations contain a metal stearate as demolding or release agent.

ZnStearate, used as release agent has the disadvantage to induce some color shift and modification of Melt flow properties.

Color stability: with or without ZnStearate, the OSP-1 based formulation shows outstanding color stability during curing time, outperforming other formulations, including one based on P-EPQ and N30 combined with ZnStearate.

### MFI stability:

Without ZnStearate : OSP-1 based formulation shows outstanding MFI stability. ZnStearate formulations : OSP-1 based formulation shows improved MFI protection versus formulations based on P-EPQ and N30combined with ZnStearate

## Claims

1. A process for the stabilization of polyethylene, **characterized by** the use of a combination COMB of compounds, the combination COMB comprising a component A, a component B and a component D;
the component A comprising a compound of formula (I), which is obtainable by reacting PCl₃ with a compound of formula (Ia);
the component B being selected from the group consisting of the compounds of formula (II), (IV) and (IX);
the component D being selected from the group consisting of the compounds of formula (XXV), (XXVI), (XXVII), (XXVIII), (XXIX), (XXXI) and (LIII) and the combination of the compounds of formulae (XXV) and (XXVIII);
and optionally comprising at least one component selected from the group consisting of component C, component E and component F;
the component C being a primary sterically hindered phenol based antioxidant,
the component E being a UV absorber, and
the component F being an anti-acid.

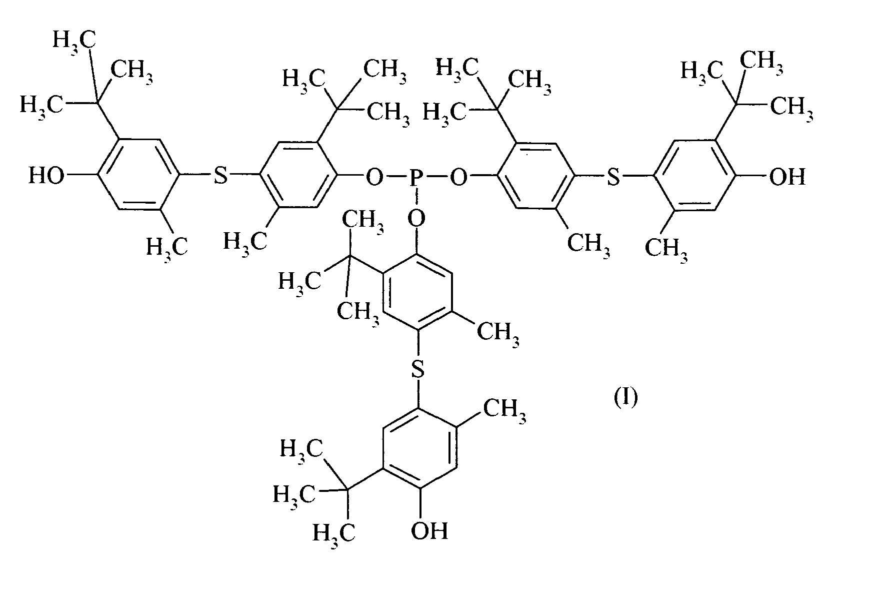

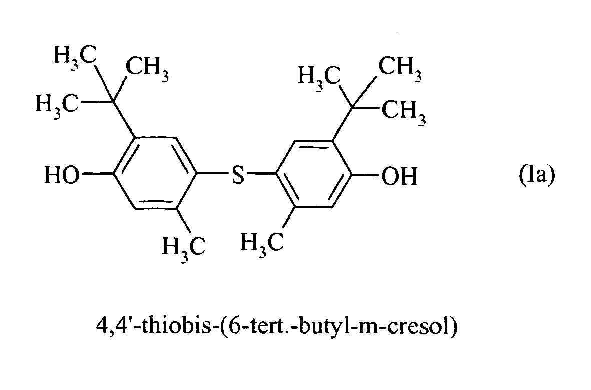

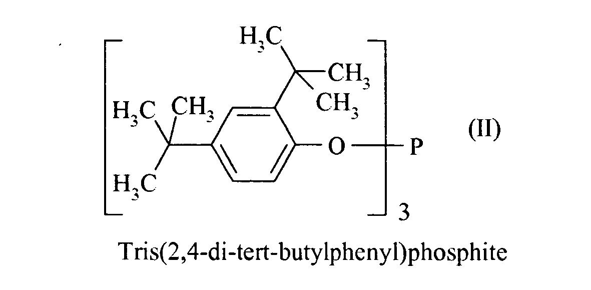

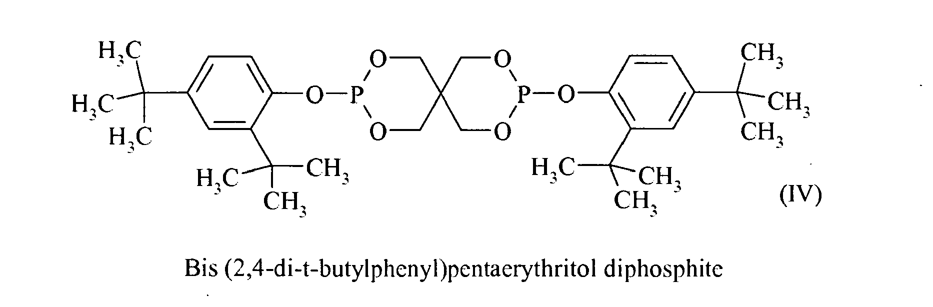

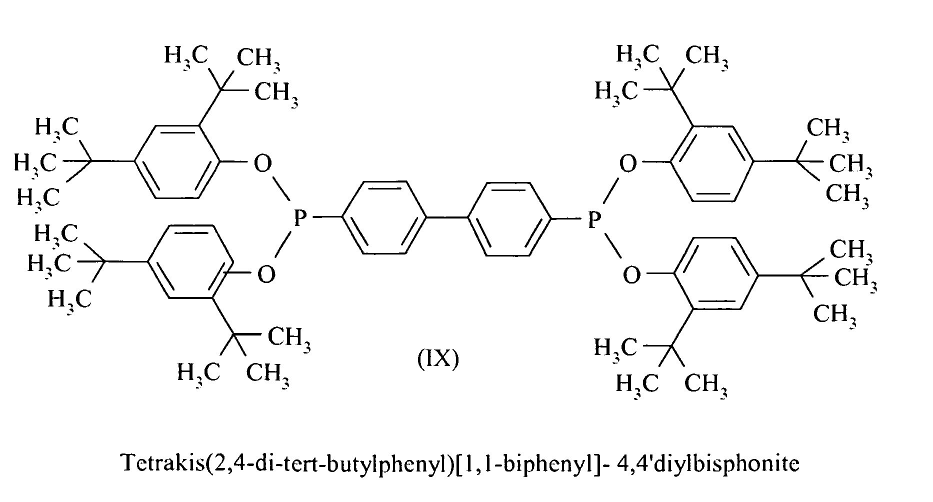

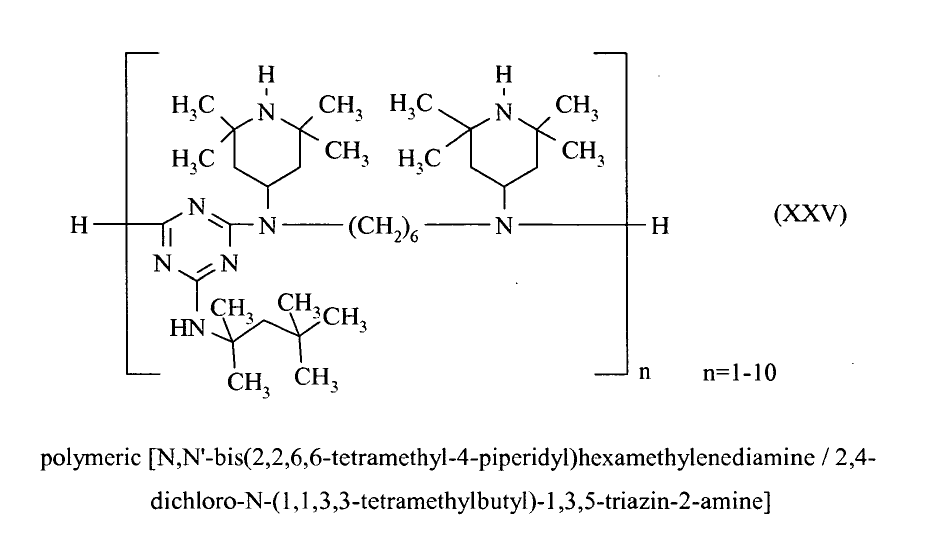

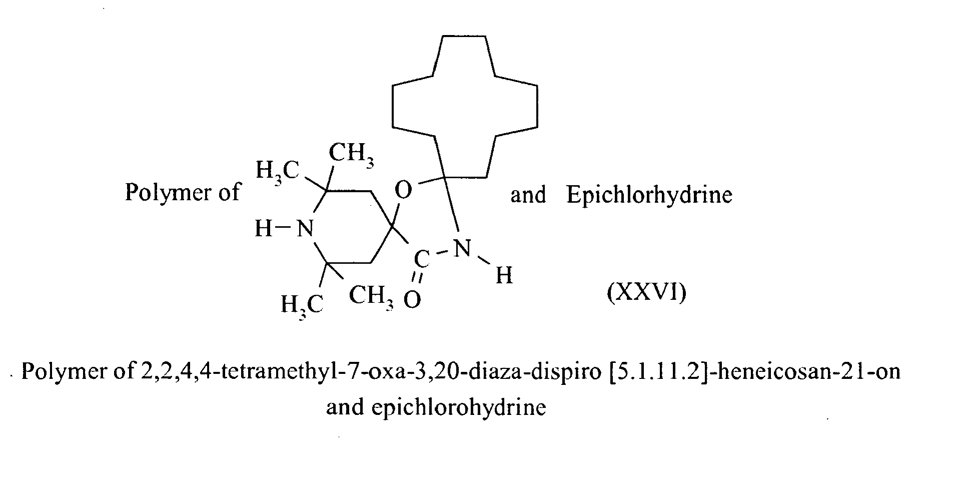

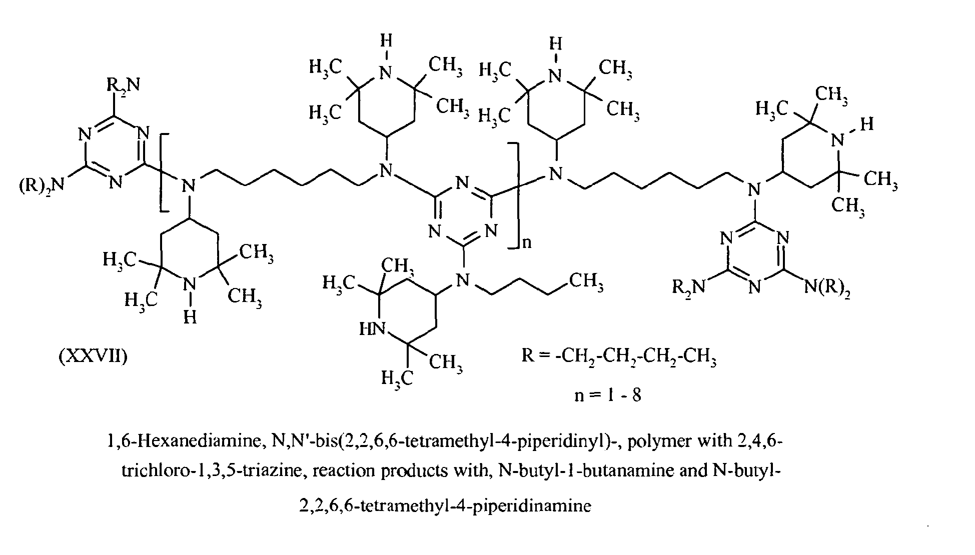

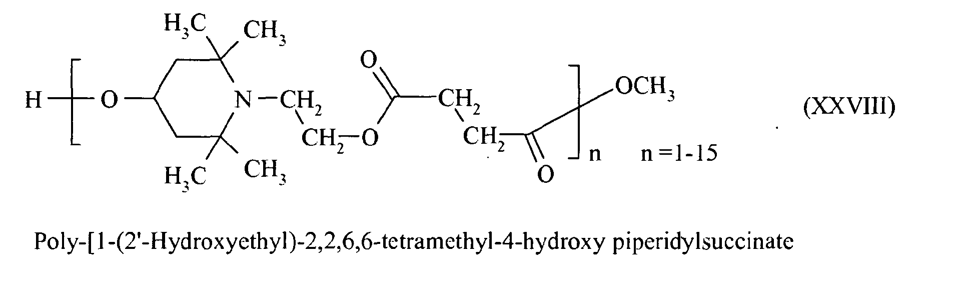

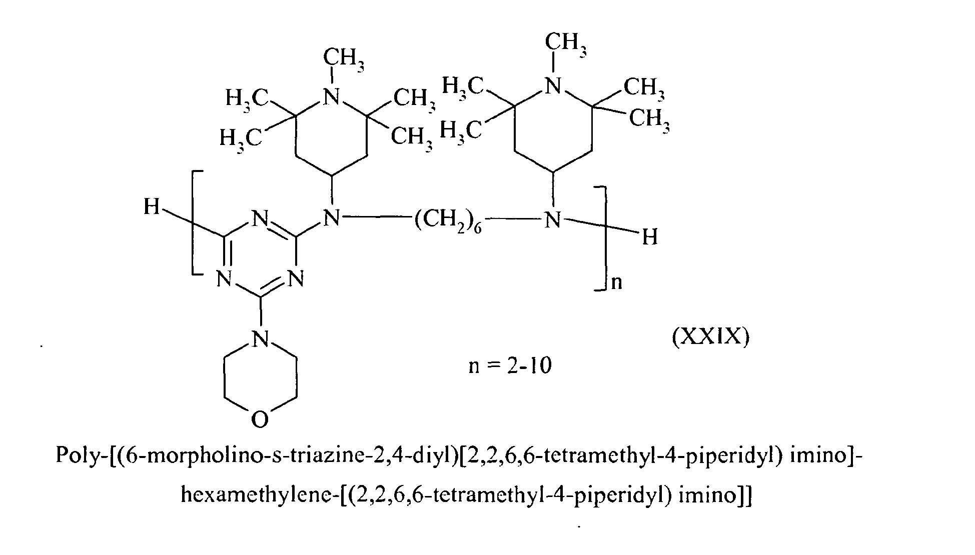

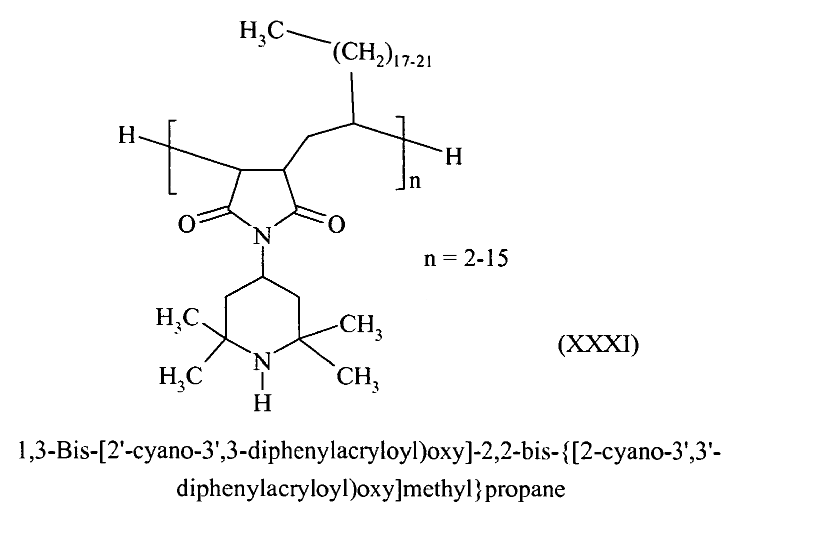

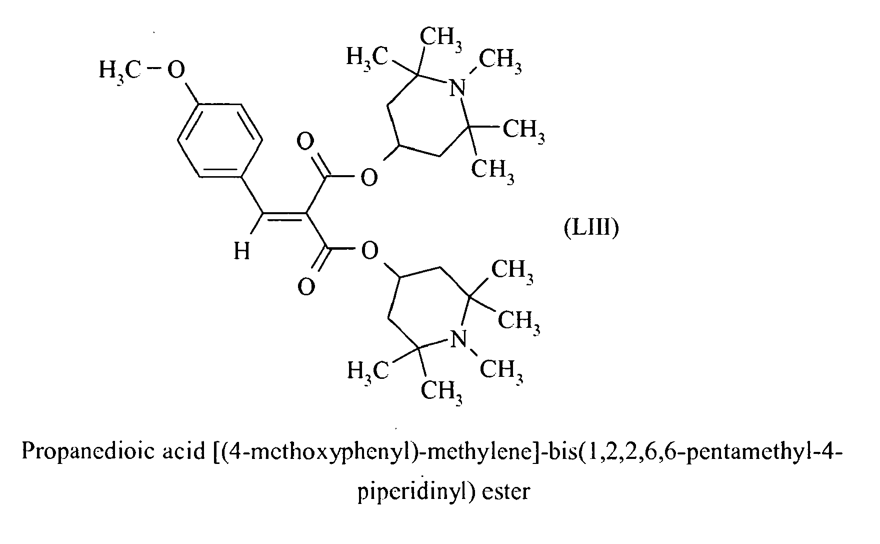

2. A process according to claim 1, wherein the combination COMB comprises the component F.

3. A process according to claim 1 or 2, wherein the component B is the compound of formula (II) or the compound of formula (IX).

4. A process according to one or more of claims 1 or 3, wherein the component D is the compound of formula (XXVI).

5. A process according to one or more of claims 1 or 4, wherein the component F is ZnO, a hydrotalcite or a metal stearate.

6. A process according to claim 5, wherein the hydrotalcite is of formula (LXII).
{Mg_{4.5}Al₂(OH)₁₃CO₃. 3.5H₂O} (LXII)

7. A process according to claim 5, wherein the metal stearate is a zinc stearate, a calcium stearate or a sodium stearate.

8. A process according to one or more of the claims 1 to 7, **characterized in that** the processing of the polyethylene is selected from the group consisting of rotomolding, extrusion, extrusion blow molding, injection blow molding, injection molding and film blowing.

9. A process according to one or more of the claims 1 to 8, **characterized in that** the processing of the polyethylene is rotomolding.

10. A process according to one or more of the claims 1 to 9, **characterized in that** the polyethylene is selected from the group consisting of MDPE, LLDPE and ethylene hexene copolymers.

11. A process according to one or more of the claims I to 10, **characterized in that** the components A, B, C, D, E and/or F arc added to the polyethylene as individual components, in form of compositions, in form of one or more masterbatches or in a combination of these possibilities.

12. Articles of polyethylene, which have been manufactured by a process according to one or more of claims 1 to 11.

13. A composition comprising
a component A, the component A comprising a compound of formula (I) as defined in claim 1;
a component B, the component B being selected from the group consisting of compounds of formula (II), (IV) and (IX) as defined in claim 1;
a component D, the component D being selected from the group consisting of the compounds of formula (XXV), (XXVI), (XXVII), (XXVIII), (XXIX), (XXXI) and (LIII) and the combination of the compounds of formulae (XXV) and (XXVIII) as defined in claim 1.

14. A composition according to claim 13 comprising a component F, the component F being a metal stearate.

15. Process for the preparation of the compositions as defined in claim 13 or 14, by physically combining the individual components.

16. Use of the compositions as defined in claim 13 or 14, for the stabilization of polyethylene.

17. Use of the compositions according to claim 16, for the stabilization of polyethylene during rotomolding.

## Patentansprüche

1. Verfahren zur Stabilisierung von Polyethylen, **gekennzeichnet durch** die Verwendung einer Kombination COMB von Verbindungen, wobei die Kombination COMB eine Komponente A, eine Komponente B und eine Komponente D umfaßt;
wobei die Komponente A eine Verbindung der Formel (I), die **durch** Umsetzung von PCl₃ mit einer Verbindung der Formel (Ia) erhältlich ist, umfaßt; die Komponente B aus der Gruppe bestehend aus den Verbindungen der Formel (II), (IV) und (IX) ausgewählt wird;
die Komponente D aus der Gruppe bestehend aus den Verbindungen der Formel (XXV), (XXVI), (XXVII), (XXVIII), (XXIX), (XXXI) und (LIII) und der Kombination der Verbindungen der Formeln (XXV) und (XXVIII) ausgewählt wird;
und gegebenenfalls mindestens eine Komponente aus der Gruppe bestehend aus Komponente C, Komponente E und Komponente F umfaßt;
wobei es sich bei der Komponente C um ein primäres Antioxidans auf der Basis eines sterisch gehinderten Phenols handelt;
es sich bei der Komponente E um einen UV-Absorber handelt und
es sich bei der Komponente F um einen Säurefänger handelt.

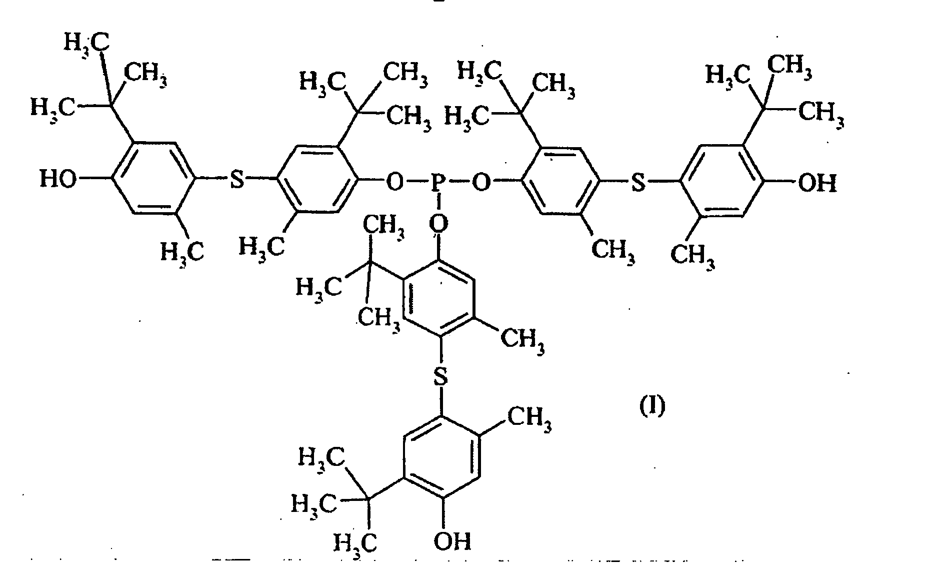

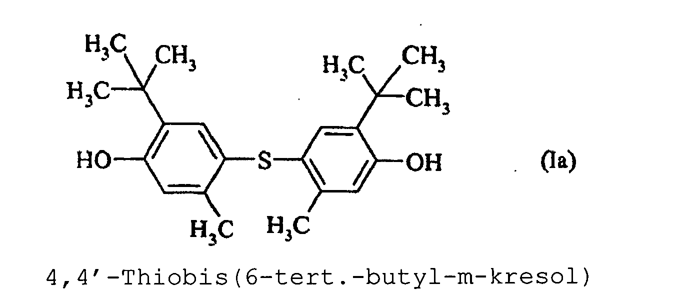

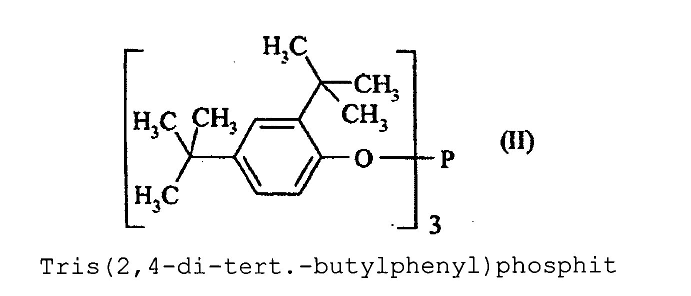

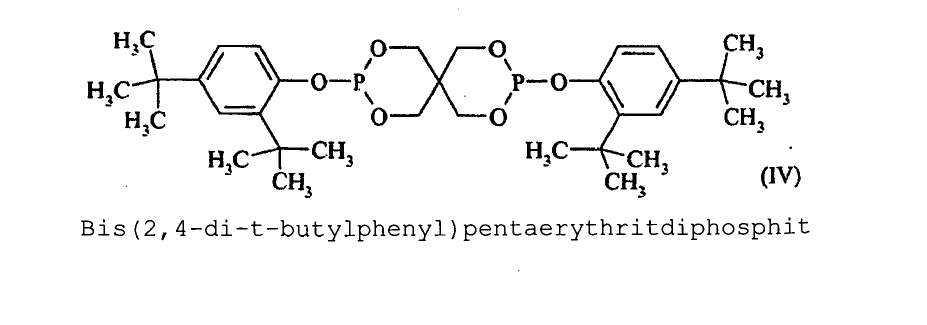

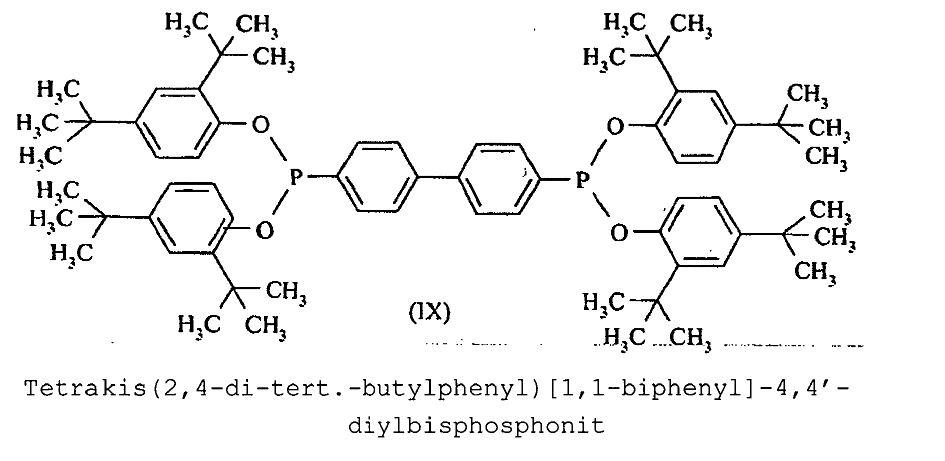

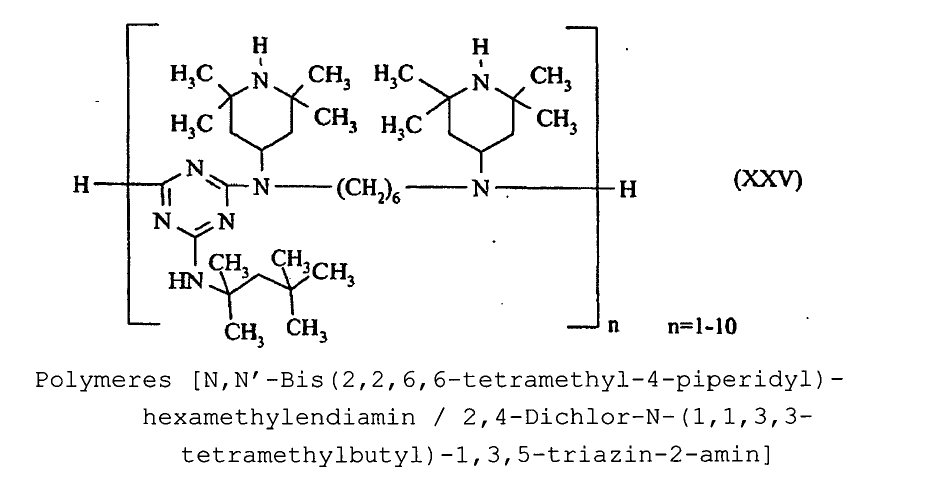

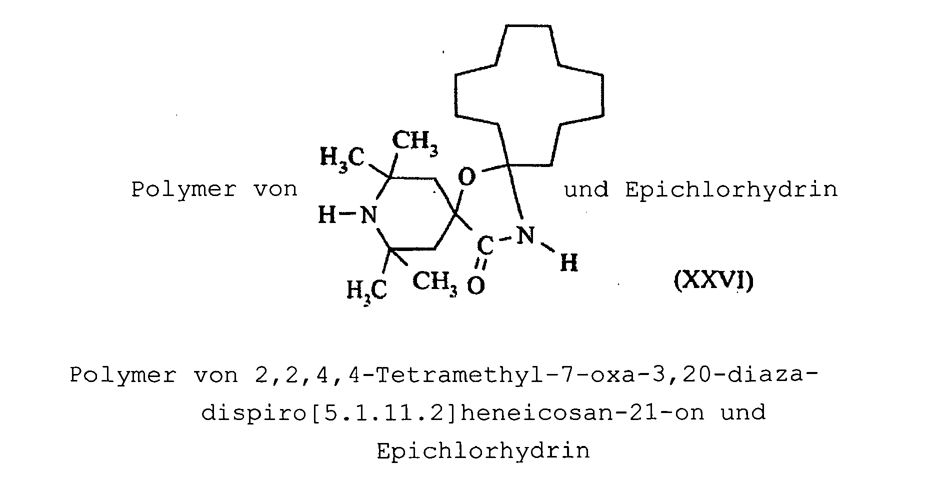

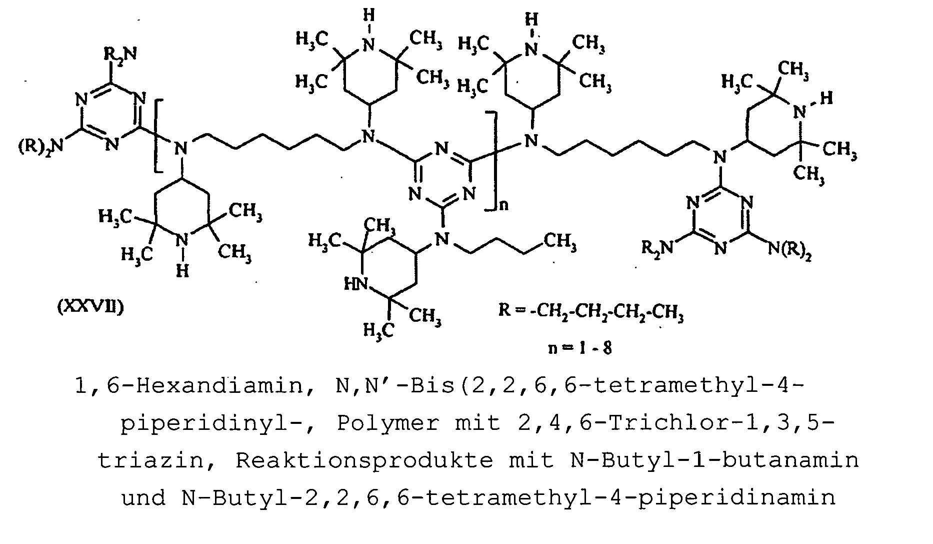

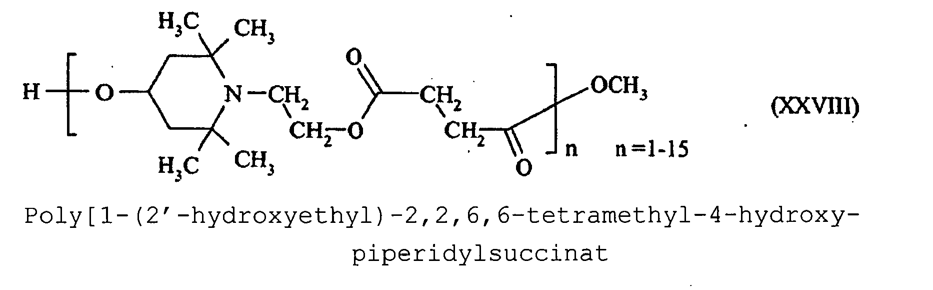

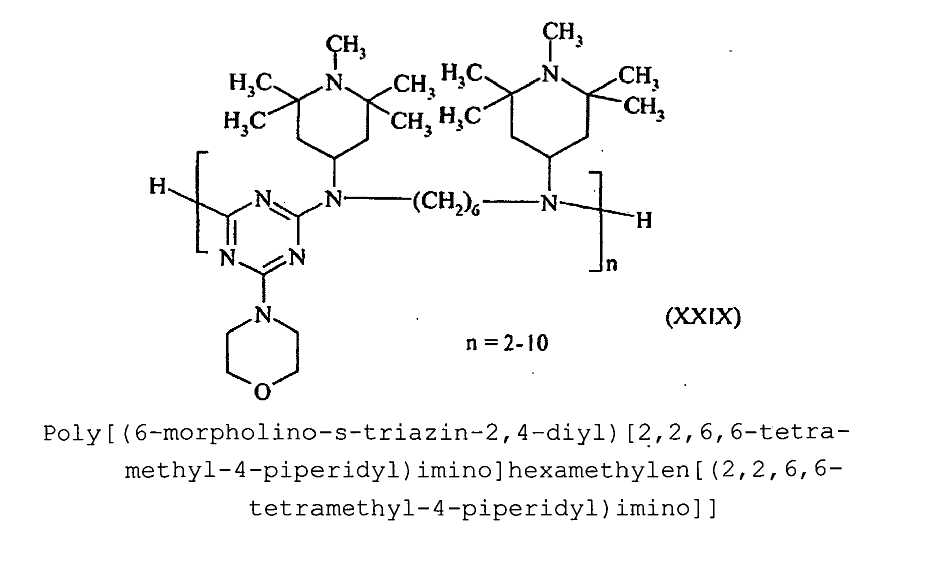

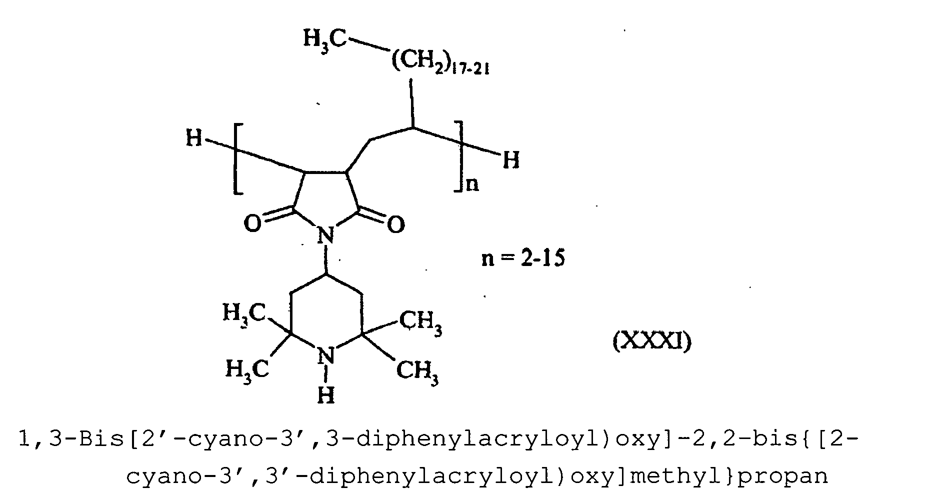

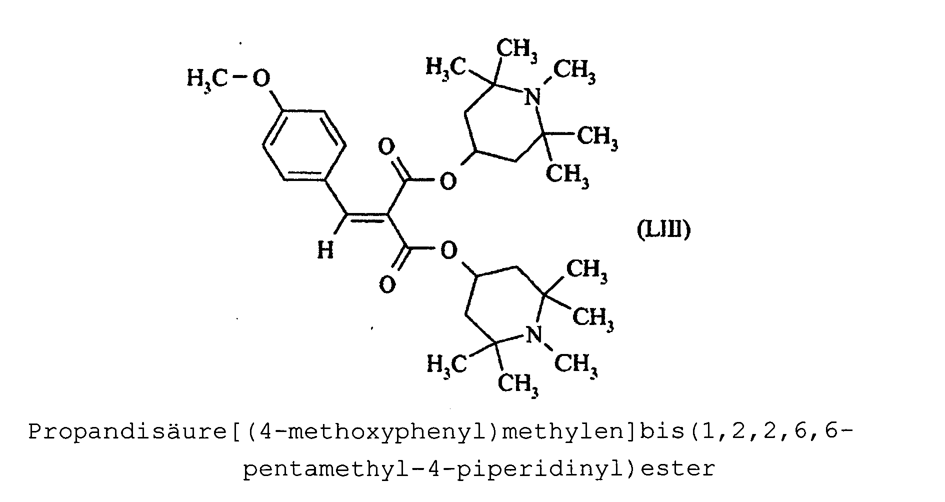

2. Verfahren nach Anspruch 1, bei dem die Kombination COMB die Komponente F umfaßt.

3. Verfahren nach Anspruch 1 oder 2, bei dem es sich bei der Komponente B um die Verbindung der Formel (II) oder die Verbindung der Formel (IX) handelt.

4. Verfahren nach einem oder mehreren der Ansprüche 1 oder 3, bei dem es sich bei der Komponente D um die Verbindung der Formel (XXVI) handelt.

5. Verfahren nach einem oder mehreren der Ansprüche 1 oder 4, bei dem es sich bei der Komponente F um ZnO, ein Hydrotalcit oder ein Metallstearat handelt.

6. Verfahren nach Anspruch 5, bei dem das Hydrotalcit die Formel (LXII) aufweist.
{Mg₄,₅Al₂(OH)₁₃CO₃.3,5H₂O} (LXII)

7. Verfahren nach Anspruch 5, bei dem es sich bei dem Metallstearat um ein Zinkstearat, ein Calciumstearat oder ein Natriumstearat handelt.

8. Verfahren nach einem oder mehreren der Ansprüche 1 bis 7, **dadurch gekennzeichnet, daß** die Verarbeitung des Polyethylens aus der Gruppe bestehend aus Rotationsgießen, Extrusion, Extrusionsblasformen, Spritzblasformen, Spritzgießen und Folienblasen ausgewählt wird.

9. Verfahren nach einem oder mehreren der Ansprüche 1 bis 8, **dadurch gekennzeichnet, daß** es sich bei der Verarbeitung des Polyethylens um Rotationsgießen handelt.

10. Verfahren nach einem oder mehreren der Ansprüche 1 bis 9, **dadurch gekennzeichnet, daß** das Polyethylen aus der Gruppe bestehend aus MDPE, LLDPE und Ethylen-Hexen-Copolymeren ausgewählt wird.

11. Verfahren nach einem oder mehreren der Ansprüche 1 bis 10, **dadurch gekennzeichnet, daß** man die Komponenten A, B, C, D, E und/oder F als einzelne Komponente, in Form von Zusammensetzungen, in Form eines oder mehrerer Masterbatches oder in einer Kombination dieser Möglichkeiten zu dem Polyethylen gibt.

12. Gegenstände aus Polyethylen, die nach dem Verfahren nach einem oder mehreren der Ansprüche 1 bis 11 hergestellt worden sind.

13. Zusammensetzung, umfassend
eine Komponente A, wobei die Komponente A eine Verbindung der Formel (I) gemäß Anspruch 1 umfaßt;
eine Komponente B, wobei die Komponente B aus der Gruppe bestehend aus Verbindungen der Formel (II), (IV) und (IX) gemäß Anspruch 1 ausgewählt ist;
eine Komponente D, wobei die Komponente D aus der Gruppe bestehend aus den Verbindungen der Formel (XXV), (XXVI), (XXVII), (XXVIII), (XXIX), (XXXI) und (LIII) und der Kombination der Verbindungen der Formeln (XXV) und (XXVIII) gemäß Anspruch 1 ausgewählt ist.

14. Zusammensetzung nach Anspruch 13, die eine Komponente F umfaßt, wobei es sich bei der Komponente F um ein Metallstearat handelt.

15. Verfahren zur Herstellung der Zusammensetzungen gemäß Anspruch 13 oder 14 durch physikalisches Vereinigen der einzelnen Komponenten.

16. Verwendung der Zusammensetzungen gemäß Anspruch 13 oder 14 zur Stabilisierung von Polyethylen.

17. Verwendung der Zusammensetzungen nach Anspruch 16 zur Stabilisierung von Polyethylen beim Rotationsgießen.

## Revendications

1. Procédé de stabilisation de polyéthylène, **caractérisé par** l'utilisation d'une combinaison COMB de composés, la combinaison COMB comprenant un composant A, un composant B et un composant D ;
le composant A comprenant un composé de formule (I), qui peut être obtenu par réaction de PCl₃ avec un composé de formule (Ia) ;
le composant B étant choisi dans le groupe constitué des composés de formule (II), (IV) et (IX) ;
le composant D étant choisi dans le groupe constitué des composés de formule (XXV), (XXVI), (XXVII), (XXVIII), (XXIX), (XXXI) et (LIII) et de la combinaison des composés de formules (XXV) et (XXVIII) ;
et comprenant éventuellement au moins un composant choisi dans le groupe constitué du composant C, du composant E et du composant F ;
le composant C étant un antioxydant primaire à base de phénol à encombrement stérique,
le composant E étant un absorbant UV et
le composant F étant un antiacide.

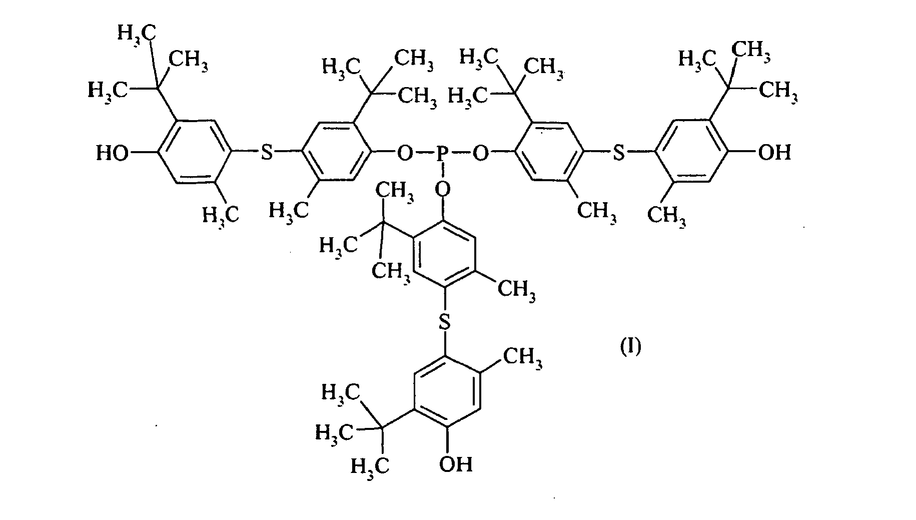

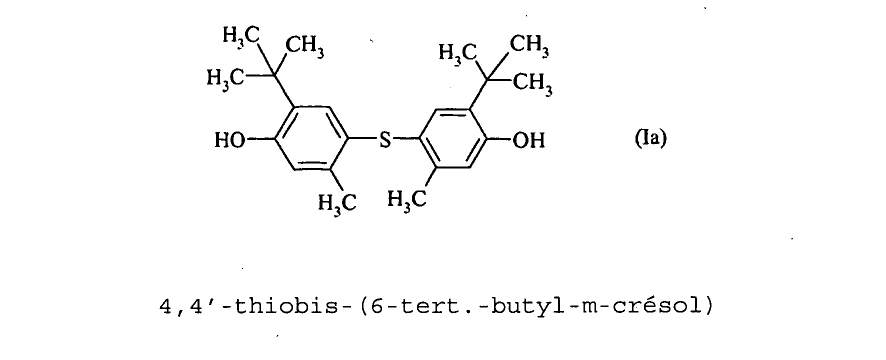

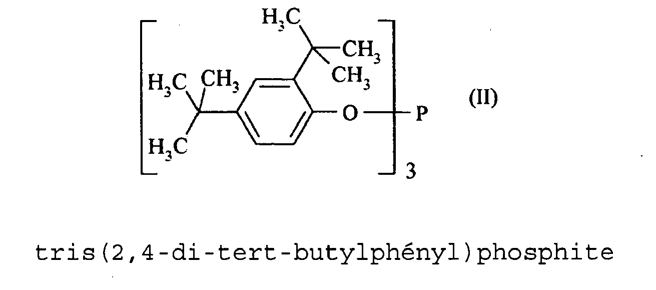

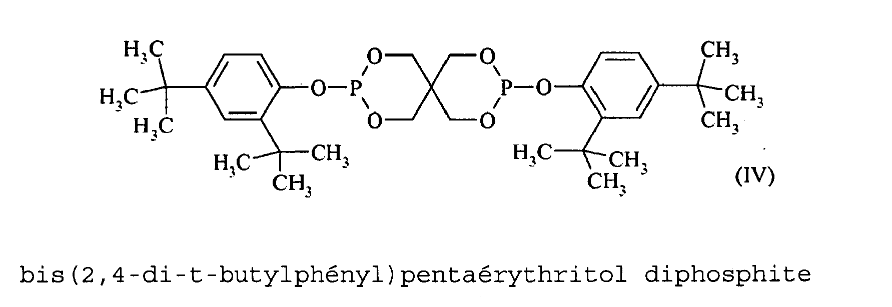

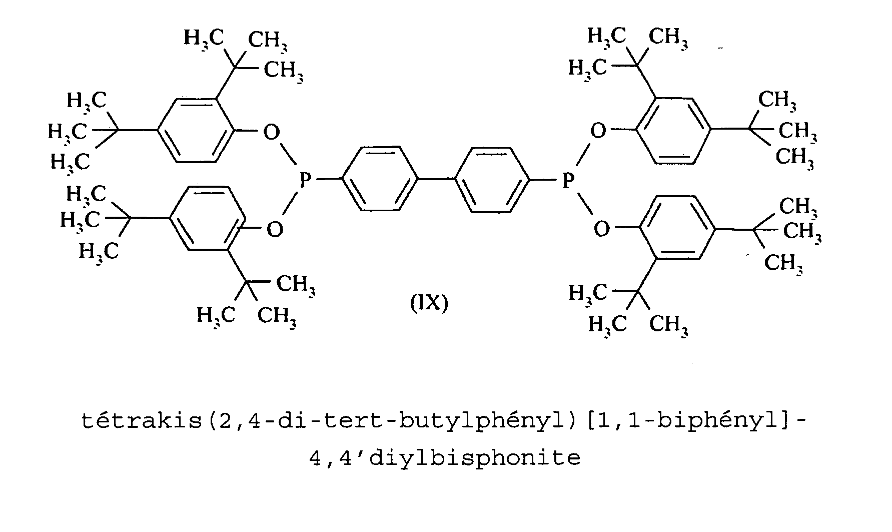

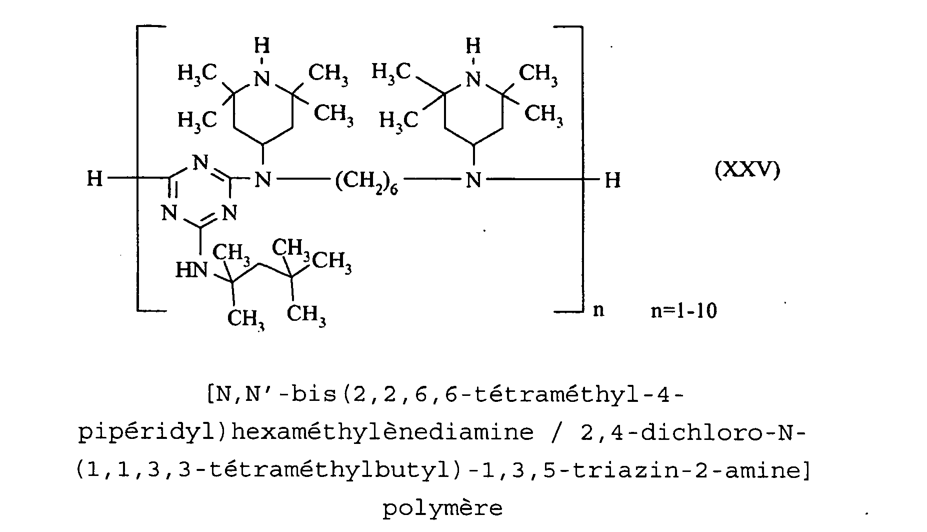

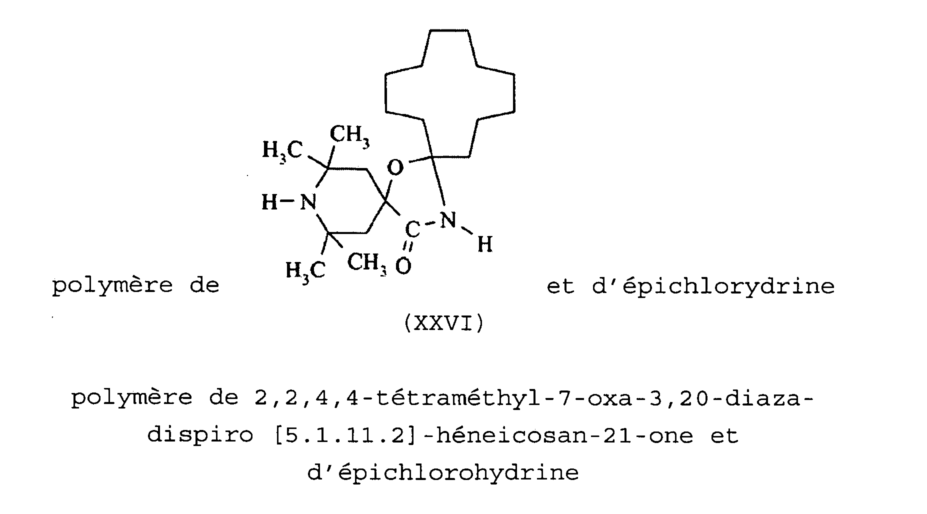

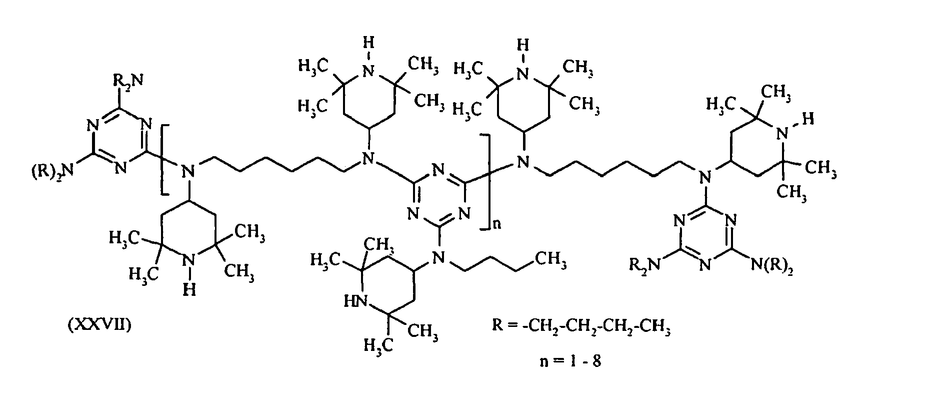

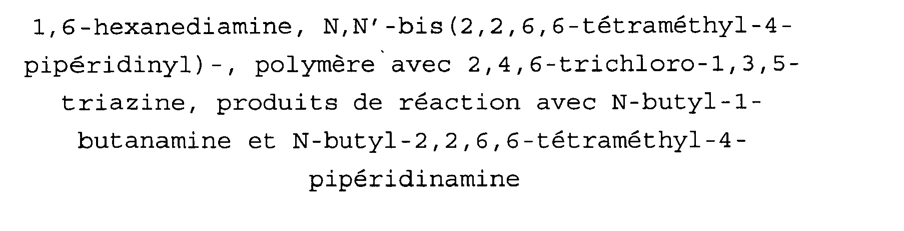

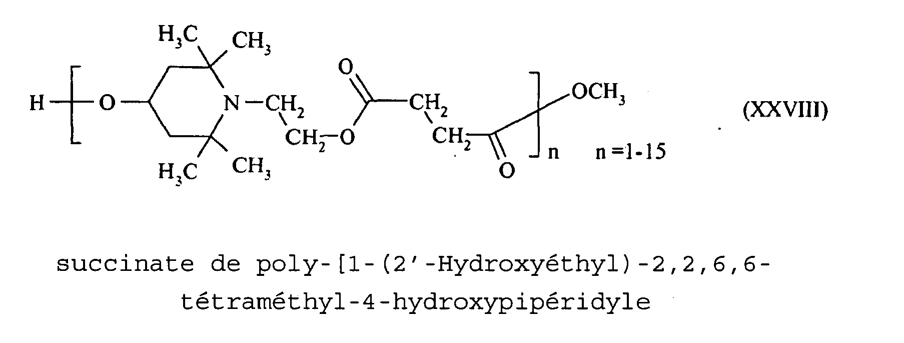

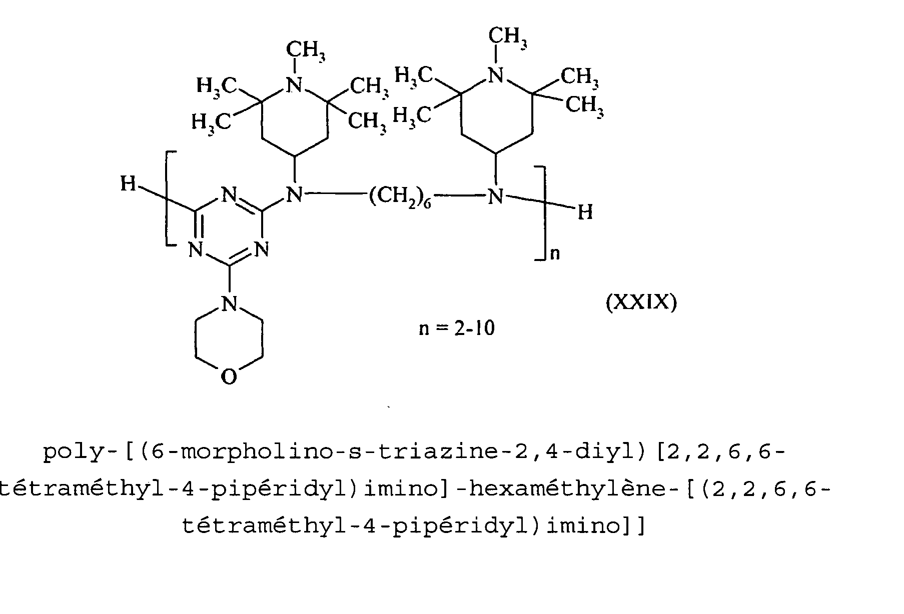

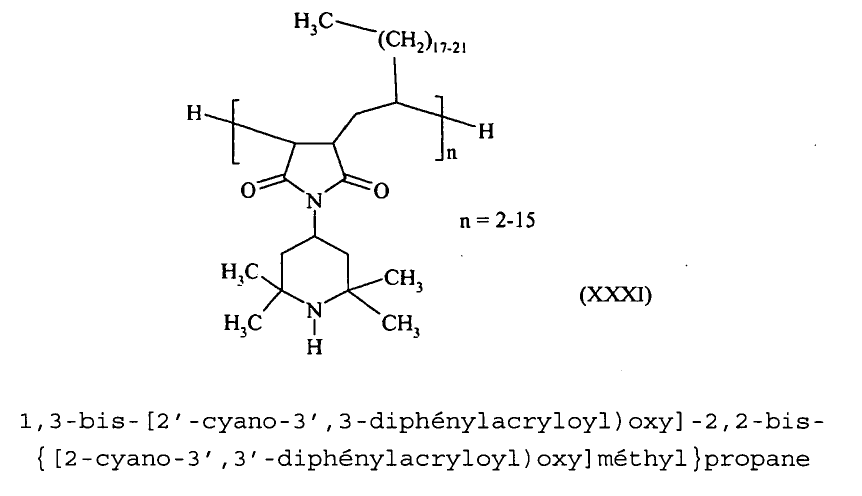

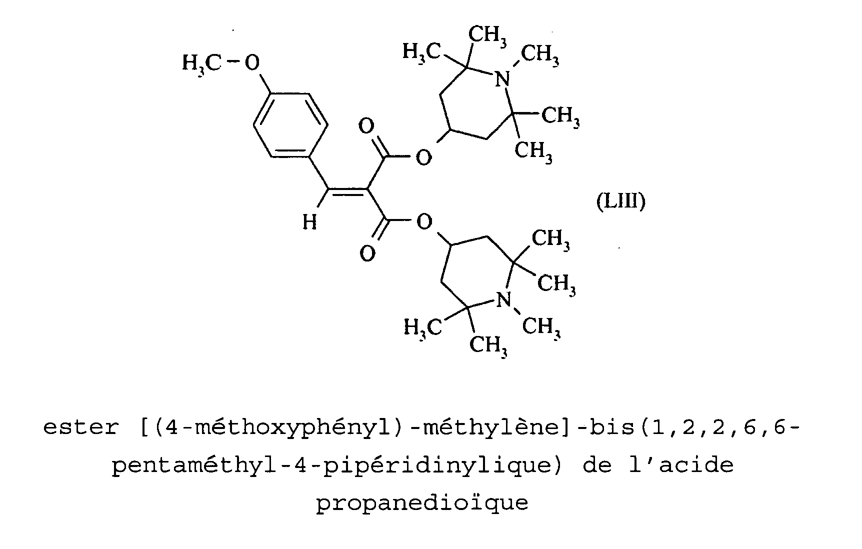

2. Procédé selon la revendication 1, dans lequel la combinaison COMB comprend le composant F.

3. Procédé selon la revendication 1 ou 2, dans lequel le composant B est le composé de formule (II) ou le composé de formule (IX).

4. Procédé selon une ou plusieurs des revendications 1 ou 3, dans lequel le composant D est le composé de formule (XXVI).

5. Procédé selon une ou plusieurs des revendications 1 ou 4, dans lequel le composant F est ZnO, un hydrotalcite ou un stéarate métallique.

6. Procédé selon la revendication 5, dans lequel l'hydrotalcite est de formule (LXII)
{Mg_{4,5}Al₂(OH)₁₃. 3 CO₃. 3,5 H₂O} (LXII)

7. Procédé selon la revendication 5, dans lequel le stéarate métallique est un stéarate de zinc, un stéarate de calcium ou un stéarate de sodium.

8. Procédé selon une ou plusieurs des revendications 1 à 7, **caractérisé en ce que** le traitement du polyéthylène est choisi dans le groupe constitué du rotomoulage, de l'extrusion, du moulage par extrusion-soufflage, du moulage par injection-soufflage, du moulage par injection et du soufflage de feuille mince.

9. Procédé selon une ou plusieurs des revendications 1 à 8, **caractérisé en ce que** le traitement du polyéthylène est le rotomoulage.

10. Procédé selon une ou plusieurs des revendications 1 à 9, **caractérisé en ce que** le polyéthylène est choisi dans le groupe constitué du MDPE, du LLDPE et des copolymères éthylène hexène.

11. Procédé selon une ou plusieurs des revendications 1 à 10, **caractérisé en ce que** les composants A, B, C, D, E et/ou F sont ajoutés au polyéthylène sous la forme de composants individuels, sous la forme de compositions, sous la forme d'un ou de plusieurs mélanges maîtres ou sous la forme d'une combinaison de ces possibilités.

12. Articles en polyéthylène, qui ont été fabriqués par un procédé selon une ou plusieurs des revendications 1 à 11.

13. Composition comprenant
un composant A, le composant A comprenant un composé de formule (I) tel que défini dans la revendication 1 ;
un composant B, le composant B étant choisi dans le groupe constitué des composés de formule (II), (IV) et (IX), tels que définis dans la revendication 1 ;
un composant D, le composant D étant choisi dans le groupe constitué des composés de formule (XXV), (XXVI), (XXVII), (XXVIII), (XXIX), (XXXI) et (LIII) et de la combinaison des composés de formules (XXV) et (XXVIII), tels que définis dans la revendication 1.

14. Composition selon la revendication 13, comprenant un composant F, le composant F étant un stéarate métallique.

15. Procédé de préparation des compositions telles que définies dans la revendication 13 ou 14, par combinaison physique des composants individuels.

16. Utilisation des compositions telles que définies dans la revendication 13 ou 14, pour la stabilisation de polyéthylène.

17. Utilisation des compositions selon la revendication 16, pour la stabilisation de polyéthylène pendant le rotomoulage.
